# FASCICULE DE BREVET EUROPEEN

(11) **EP 2 930 375 B1**
(45) Date de publication et mention de la délivrance du brevet: **09.11.2016**
(21) Numéro de dépôt: 15161570.5
(22) Date de dépôt: 30.03.2015
(51) Int. Cl.: F15B 11/22, F15B 18/00, F15B 13/02, B64C 27/58

(54) **Vanne d'équilibrage de l'alimentation en fluides des corps de vérin d'une servocommande maneuvrant les pales d'un rotor de giravion**
Ausgleichsschieber der Flüssigkeitszufuhr zu den Zylinderkörpern einer Servosteuerung, die die Blätter des Rotors eines Drehflügelflugzeugs steuern
A pressure-balance valve for balancing fluid feed to actuator cylinders of a servo-control for controlling rotor blades of a rotorcraft

(30) Priorité: 11.04.2014 FR 1400886
(43) Date de publication de la demande: 14.10.2015
(73) Titulaire: Airbus Helicopters, 13725 Marignane Cedex (FR)
(72) Inventeur: Marger, Thibaut, 13180 Gignac-la-Nerthe (FR); Groll, Arnaud, 13300 Salon de Provence (FR); Bihel, Jean-Romain, 13740 Le Rove (FR); Coïc, Clément, 13090 Aix en Provence (FR)
(74) Mandataire: GPI & Associés

(56) Documents cités:
- JP-A- H04 357 311
- US-A- 3 543 641
- US-A- 4 128 047
- US-A1- 2005 132 877

## Description

La présente invention est du domaine des aéronefs à voilure(s) tournantes(s) équipés d'au moins un rotor entraîné en rotation par un groupe de motorisation. La présente invention relève plus particulièrement des dispositifs de synchronisation du mouvement d'organes hydrauliques équipant les rotors de giravion pour faire varier l'incidence aérodynamique de profils aérodynamiques des pales d'un tel rotor.

Les giravions sont équipés d'au moins un rotor principal à axe sensiblement vertical procurant au moins la sustentation du giravion. Dans le cas spécifique d'un hélicoptère, le rotor principal procure aussi la propulsion du giravion et son guidage en tangage et en roulis.

Les giravions sont encore couramment équipés d'au moins un dispositif anti-couple tel que formé d'un rotor annexe à axe sensiblement horizontal apte à procurer une stabilisation et un guidage en lacet du giravion. Un tel rotor annexe est par exemple un rotor de queue ou par exemple encore au moins une hélice propulsive dans le cas d'un hélicoptère à vitesses élevées de propulsion en translation.

Pour faire varier l'attitude en vol du giravion, les pales composant la voilure tournante dudit au moins un rotor sont individuellement montées articulées sur un moyeu du rotor en pivotement autour d'un axe de variation de pas orienté suivant la direction générale d'extension des pales. Un pilote génère des commandes de vol provoquant un pivotement des pales autour de leur axe de variation de pas cycliquement et/ou collectivement et par suite provoquant une variation de l'incidence aérodynamique des profils des pales. Ledit pilote est potentiellement un pilote humain ou un pilote automatique.

Les pales d'un rotor de giravion sont manoeuvrables autour de leur axe de variation de pas par l'intermédiaire d'un organe de manoeuvre auquel les pales sont individuellement reliées par l'intermédiaire de bielles de variation de pas.

Par exemple, pour un rotor principal pour lequel il est recherché de pouvoir faire varier le pas des pales cycliquement et/ou collectivement, l'organe de manoeuvre des pales est couramment agencé en double plateau, couramment dénommé plateaux cycliques.

Le double plateau est monté mobile axialement et en rotule sur un mât porteur du rotor principal. Un déplacement axial du double plateau suivant l'axe d'entraînement en rotation de la voilure du rotor principal provoque une variation collective du pas des pales. Une inclinaison du double plateau autour de l'articulation en rotule provoque une variation cyclique du pas des pales.

Par exemple encore pour un rotor annexe, l'organe de manoeuvre des pales est couramment agencé en bras ou en plateau selon le nombre de pales du rotor annexe. L'organe de manoeuvre des pales est alors monté mobile au moins axialement le long de l'axe d'entraînement en rotation de la voilure du rotor annexe pour provoquer une variation collective du pas des pales sous l'effet d'un déplacement axial de l'organe de manoeuvre des pales.

Dans ce contexte, l'organe de manoeuvre des pales d'un rotor de giravion autour de leur axe de variation de pas est couramment actionné par des servocommandes.

De telles servocommandes permettent d'assister un pilote humain vis-à-vis des efforts qu'il doit fournir pour faire varier le pas des pales par l'intermédiaire d'une chaîne mécanique de transmission de mouvements manoeuvrée sous l'effet de l'entraînement par un pilote humain d'un organe de commande de vol.

Les servocommandes peuvent encore être pilotées par un actionneur en fonction de commandes de vol générées par un pilote automatique ou en fonction de commandes de vol électriques générées par un organe de commande de vol entraîné par un pilote humain.

Dans ce contexte, il se pose en aéronautique le problème de la sécurisation d'un aéronef vis-à-vis d'un cas de panne des servocommandes exploitées pour manoeuvrer un organe de variation d'attitude de l'aéronef sous l'effet des commandes de vol générées par un pilote. Un tel organe de variation d'attitude de l'aéronef est notamment formé par les pales d'un giravion tel que susvisé, ou notamment encore est classiquement formé par un volet dans le cas d'un avion.

C'est pourquoi, il est courant de manoeuvrer un même organe de variation d'attitude d'un aéronef au moyen de plusieurs servocommandes à simple corps de vérin double effet ou au moyen d'une servocommande à multiple corps de vérin double effet. Les différentes servocommandes à simple corps de vérin ou les différents corps de vérin d'une servocommande à multiple corps de vérin sont individuellement alimentés en fluide par des circuits hydrauliques respectifs depuis des sources de fluide qui leur sont respectivement affectées. Ces dispositions sont telles que dans le cas d'un dysfonctionnement de l'un des circuits hydrauliques, au moins un autre des circuits hydrauliques peut être exploité isolément pour manoeuvrer l'organe de variation d'attitude de l'aéronef.

Classiquement, les servocommandes à simple corps de vérin ou les corps de vérin d'une servocommande à multiple corps de vérin sont individuellement alimentés en fluide depuis les sources de fluide qui leur sont respectivement affectées par l'intermédiaire de distributeurs hydrauliques conjointement actionnés conformément aux commandes de vol générées par le pilote.

Selon les commandes de vol opérées par le pilote, les distributeurs hydrauliques répartissent la circulation des fluides entre les différentes sources de fluide et les différentes chambres des corps de vérin. De tels distributeurs hydrauliques sont fréquemment intégrés aux servocommandes mais peuvent aussi être montés indépendamment sur les conduits des circuits hydrauliques reliant la ou les servocommandes aux différentes sources de fluide.

Compte tenu de la faible extension de l'organe de manoeuvre des pales en pivotement autour de leur axe de variation de pas, il est classiquement préféré dans le cas d'un giravion d'exploiter une servocommande comportant un vérin hydraulique à multiple corps de vérin pour actionner ledit organe de manoeuvre des pales.

Pour connaître un environnement technologique proche de la présente invention, on pourra par exemple se reporter au document FR2916492 qui décrit une servocommande à multiples corps de vérin convenant à la manoeuvre en variation de pas des pales d'un rotor de giravion.

Il se pose alors la contrainte d'obtenir une manoeuvre rigoureusement synchronisée du déplacement relatif entre les différents corps de vérin et la tige du vérin hydraulique commune aux différents corps de vérin. Une telle contrainte s'inscrit notamment dans l'obligation de séparer rigoureusement les circuits hydrauliques alimentant indépendamment chacun des corps de vérin de la servocommande à multiple corps de vérin.

Le document US3543641 ou FR1529793 décrit un dispositif électrohydraulique de commande d'organes aérodynamiques d'avions ou aérodynes. Ce dispositif comporte pour chacun des organes commandés : un groupe moteur hydraulique à deux vérins alimentés par des circuits hydrauliques indépendants, deux distributeurs, associés respectivement à ces vérins pour contrôler leur alimentation en fluide hydraulique et accouplés mécaniquement entre eux, deux récepteurs des impulsions électriques de commande agissant sur les distributeurs. Enfin, deux organes interrupteurs associés respectivement aux récepteurs établissent ou coupent leur liaison aux distributeurs. Les deux vérins hydrauliques moteurs associés à chacun des organes commandés sont disposés en tandem. Le dispositif comporte deux chaînes électriques identiques de commande et d'asservissement. Chacune de ces chaînes comprend sur chaque moteur un récepteur et l'interrupteur correspondant. Des organes de commutation sont prévus pour qu'en cas de mauvais fonctionnement d'une chaîne de commande en service, l'autre chaîne lui soit automatiquement substituée. D'autres organes de commutation sont également prévus pour qu'en cas de défaillance dans cette deuxième chaîne, les deux interrupteurs de chaque moteur mettent en action simultanément les récepteurs associés, en même temps que ces récepteurs sont actionnés électriquement pour placer les distributeurs des deux vérins dans une position de retour des organes aérodynamiques commandés en position de sécurité.

Dans le cadre d'un avion, il a été proposé de synchroniser le fonctionnement de plusieurs servocommandes à simple corps de vérin manoeuvrant conjointement un volet, en équilibrant les pressions des fluides circulant respectivement dans les chambres de fond et dans les chambres de tête des différents corps de vérin.

On pourra par exemple se reporter à ce propos aux documents US4409884 US4825748. Plus particulièrement selon le document US4825748, une vanne équilibre les pressions respectives des fluides circulant à travers deux servocommandes à simple corps de vérin manoeuvrant conjointement un volet. Cependant, l'organisation de la vanne décrite par le document US 4825748 ne permet pas de ségréguer rigoureusement les circuits hydrauliques d'alimentation respective en fluide de l'une et l'autre des servocommandes.

D'autres documents ont été considérés dans le cadre de l'invention, à savoir : JPH04357311, US4128047, US6178867 et US2005132877.

Par ailleurs toujours au regard de la sécurisation des giravions, le fonctionnement des organes hydrauliques composant les installations hydrauliques dédiées à la manoeuvre des pales en variation de pas doit être régulièrement contrôlé. Par ailleurs, il est souhaitable d'alerter en vol le pilote d'un giravion d'un dysfonctionnement de telles installations hydrauliques pouvant être une source de danger.

C'est pourquoi, afin de limiter la fréquence des opérations de contrôle et de maintenance desdites installations hydrauliques et afin de fournir au pilote une information sur leur éventuel dysfonctionnement, l'intégration de dispositifs de détection d'un dysfonctionnement desdits organes hydrauliques fait l'objet d'une recherche constante.

Plus particulièrement en ce qui concerne les servocommandes, leur dysfonctionnement est potentiellement dû à une panne dormante d'un organe hydraulique contrôlant leur mise en oeuvre, tel que par exemple l'un au moins desdits distributeurs hydrauliques. On rappelle qu'une panne est communément dénommée dormante dans le cas où ladite panne est non détectée. En conséquence, il apparaît opportun de détecter au mieux de telles pannes dormantes pour préserver la servocommande et éviter son dysfonctionnement, voire pour anticiper la prise en charge d'un tel dysfonctionnement potentiel.

Cependant, les systèmes de détection du fonctionnement d'un organe hydraulique sont encombrants et leur intégration audit organe hydraulique est souvent délicate à réaliser. Il est à relever que les servocommandes dédiées à la manoeuvre en variation de pas des pales d'un rotor de giravion sont placées en environnement hostile et encombré ce qui accroît les difficultés d'implantation d'un dispositif de détection de panne de leur fonctionnement.

Il en ressort que dans la pratique, la détection des pannes dormantes de l'ensemble des organes hydrauliques placés sur les circuits d'alimentation en fluide des servocommandes est souvent délicate à mettre en oeuvre et est délaissée au profit d'un contrôle régulier du fonctionnement de la servocommande. On pourra par exemple se reporter à ce propos au document FR2916492 déjà mentionné, qui divulgue un système de détection d'un dysfonctionnement de la servocommande décrite dans ce document.

En cas de dysfonctionnement détecté d'une servocommande, la cause d'un tel dysfonctionnement est alors recherchée par vérification au cours d'une opération de maintenance de l'ensemble des organes hydrauliques des différents circuits hydrauliques procurant l'alimentation respective en fluides des différents corps de vérin de la servocommande.

Dans ce contexte, un objet de la présente invention est une vanne convenant à l'équilibrage entre les pressions de différents fluides circulant respectivement à l'intérieur de différents corps de vérin d'au moins une servocommande apte à manoeuvrer un organe de variation d'attitude en vol d'un aéronef, tel que les pales d'un rotor de giravion ou un volet d'avion.

Il est bien évidemment compris que les différents corps de vérin sont indifféremment des corps de vérin d'une servocommande à multiple corps de vérin ou des corps de vérin respectifs d'une pluralité de servocommandes à simple corps de vérin.

La vanne de la présente invention est plus particulièrement recherchée apte à être exploitée dans le cadre d'une variation d'attitude en vol d'un giravion à partir d'une manoeuvre des pales d'au moins un rotor du giravion autour de leur axe individuel de variation de pas, au moyen d'une servocommande à multiple corps de vérin actionnant un organe de manoeuvre des pales.

Il est plus particulièrement visé par la présente invention de proposer une telle vanne sous contrainte d'une séparation stricte entre les différents circuits hydrauliques alimentant respectivement en fluides distincts les divers corps de vérin, une telle stricte séparation interdisant rigoureusement un mélange des fluides entre eux.

Il est aussi plus particulièrement visé par la présente invention de proposer une telle vanne dont l'architecture permet l'intégration aisée de moyens de contrôle du fonctionnement de ladite au moins une servocommande à partir d'une détection du fonctionnement de la vanne.

Il est encore recherché une telle vanne de structure simple dont la maintenance est aisée et dont l'architecture permet de limiter au mieux ses conditions d'usure, de fatigue et de dégradation à l'usage. Dans le cadre d'une telle recherche, les organes en mouvement de la vanne sont souhaités en nombre le plus restreint possible.

Une telle restriction du nombre des organes en mouvement s'inscrit dans une recherche d'un fonctionnement fiable de la vanne, en limitant les facteurs propices à sa dégradation et en évitant son usure rapide en raison des mouvements répétés auxquels sont typiquement soumis lesdits organes en mouvement. Il est à relever que la vanne de l'invention est destinée à être placée à bord du giravion à proximité dudit rotor dans un environnement hostile notamment soumis à de fortes vibrations.

Dans ce cadre de recherche, la présente invention vise encore à proposer une telle vanne procurant un équilibrage entre les pressions desdits fluides en évitant au mieux de brusques variations de pression des fluides et en évitant au mieux des manoeuvres brutales desdits organes en mouvement en vue de les préserver et de limiter les causes potentielles de dysfonctionnement de la vanne.

La vanne de la présente invention est une vanne convenant à l'équilibrage entre les pressions de différents fluides circulant respectivement à l'intérieur d'une pluralité de corps de vérin double effet d'au moins une servocommande apte à manoeuvrer un organe de variation d'attitude en vol d'un aéronef.

La vanne de la présente invention convenant à un tel contexte d'exploitation comprend un corps de vanne comportant au moins :
- ) une chambre de guidage en translation d'un piston suivant une direction axiale d'extension de la chambre,
- ) deux premiers conduits débouchant sur la chambre et affectés chacun à la circulation d'un fluide respectif entre l'extérieur et l'intérieur de la vanne,
- ) deux passages d'acheminement individuel desdits fluides à l'intérieur de la vanne respectivement entre les premiers conduits et des deuxièmes conduits débouchant chacun sur la chambre et affectés à la circulation d'un fluide respectif entre l'extérieur et l'intérieur de la vanne,
- ) au moins un conduit de rejet des fluides admis à l'intérieur de la chambre.

Conformément à une telle architecture de la vanne, des chemins fluidiques de la vanne acheminant respectivement les fluides comprennent chacun distinctement au moins un dit premier conduit, un dit passage et un dit deuxième conduit placés en communication fluidique entre eux. La position axiale du piston à l'intérieur de la chambre est classiquement régulée sous l'effet de poussées antagonistes respectivement exercées par les fluides aux faces d'extrémité axialement opposées du piston, un déplacement axial du piston étant provoqué sous l'effet d'une différence de pression entre les fluides respectivement admis dans les deuxièmes conduits.

La position du piston à l'intérieur de la chambre est typiquement stabilisée par l'équilibre entre lesdites poussées antagonistes résultant de l'équilibre des pressions respectives des fluides à l'intérieur de l'un et l'autre des chemins fluidiques. Un déséquilibre entre lesdites poussées antagonistes provoque un déplacement axial du piston depuis sa position stabilisée et par suite provoque une admission de fluide à l'intérieur de la vanne en provenance de l'un des conduits de l'un des chemins fluidiques, rétablissant ainsi l'équilibre entre lesdites poussées antagonistes.

Conformément à un tel contexte, la vanne de la présente invention est principalement reconnaissable en ce que, pour chacun desdits chemins fluidiques, le premier conduit est muni à son débouché sur la chambre d'un obturateur mobile coopérant avec une rampe ménagée sur le piston.

Un glissement de l'obturateur le long de la rampe provoqué sous l'effet d'un déplacement en translation du piston à l'intérieur de la chambre dégage le débouché du premier conduit et par suite place le premier conduit et le deuxième conduit en communication fluidique entre eux à travers ledit passage.

Ladite mise en communication fluidique entre le premier conduit et le deuxième conduit fournit un apport de fluide à travers le passage depuis le premier conduit vers le deuxième conduit. Ledit apport de fluide équilibre alors les pressions des fluides circulant respectivement à travers les chemins fluidiques.

De telles dispositions permettent d'organiser la vanne selon une architecture simple et rigoureusement sécurisée au regard d'une séparation stricte des chemins fluidiques entre eux interdisant tout mélange entre les différents fluides, et cela en limitant le nombre d'organes en mouvement et notamment en évitant la mise en oeuvre classique d'organes élastiquement déformables réputés soumis à la fatigue sous l'effet de leur déformation répétée.

Plus particulièrement, les rampes peuvent être avantageusement aménagées aux extrémités axiales respectives du piston et les passages aux extrémités axiales respectives de la chambre. Le premier conduit et le deuxième conduit d'un même chemin fluidique peuvent aisément déboucher à une extrémité axiale de la chambre qui leur est affectée et formant un dit passage.

Tel que décrit plus loin, une telle simplicité de structure de la vanne autorise :
- ) une organisation des chemins fluidiques ménagés dans des blocs de corps de vanne structurellement distincts et axialement assemblés entre eux, avec notamment pour avantage d'éviter la propagation de criques éventuelles entre les parties du corps de vanne ménageant respectivement les chemins fluidiques,
- ) une intégration aisée dans la vanne de dispositifs indiquant un dysfonctionnement de la vanne et/ou des corps de vérin, sans complexifier outre mesure l'organisation structurelle de la vanne,
- ) un aménagement de moyens de freinage et de moyens d'amortissement hydraulique de la mobilité du piston, permettant de stabiliser la mobilité du piston en évitant notamment de brusques déplacements du piston et/ou des déplacements inopportuns du piston potentiellement provoqués sous l'effet des fortes vibrations auxquelles la vanne est soumise,
- ) un aménagement du conduit de rejet dans le corps de vanne en étant isolé par des moyens d'étanchéité de l'un et l'autre des chemins fluidiques ménagés aux extrémités axiales de la chambre,
sans complexifier outre mesure l'organisation structurelle de la vanne.

L'isolement dudit au moins un conduit de rejet autorise son agencement en un drain unique collectant et évacuant à l'air libre hors de la vanne des résidus de fluide issus d'une infiltration des fluides à travers les moyens d'étanchéité. De tels résidus de fluide peuvent être perdus sans avoir à être réintroduits dans les circuits hydrauliques à travers lesquels circulent les fluides entre des sources de fluides respectives et la ou les servocommandes afin de préserver la stricte ségrégation des fluides l'un par rapport à l'autre.

Plus particulièrement selon une forme de réalisation de l'invention et en considérant distinctement chacun desdits chemins fluidiques, le passage peut être avantageusement formé par un tronçon d'extrémité axiale de la chambre sur lequel débouchent le premier conduit et le deuxième conduit.

Bien évidemment pour interdire tout mélange entre les fluides, les tronçons d'extrémité axiale de la chambre respectivement affectés à l'un et l'autre des chemins fluidiques sont isolés l'un de l'autre de toute communication fluidique entre eux. Un tel isolement des tronçons d'extrémité axiale de la chambre peut être avantageusement ménagé par lesdits moyens d'étanchéité et par le drain évacuant hors de la vanne à l'air libre lesdits résidus de fluides potentiels provenant de chacun des passages respectifs des chemins fluidiques.

Selon une forme avantageuse de réalisation, le corps de vanne est subdivisé en deux blocs de corps de vanne axialement assemblés entre eux.

Lesdits blocs ménagent respectivement les chemins fluidiques en comportant des tronçons de chambre respectifs coaxiaux. En outre, le piston est subdivisé en deux tronçons de piston structurellement distincts, les tronçons de piston étant logés respectivement dans les tronçons de chambre en prenant axialement appui l'un contre l'autre.

La distinction structurelle entre les deux blocs permet de préserver la vanne d'une propagation de criques dans le corps de vanne de l'un à l'autre des blocs. De telles criques peuvent notamment résulter des contraintes extérieures auxquelles est soumise la vanne et plus particulièrement peuvent résulter des vibrations auxquelles est soumise la vanne en raison de son implantation à proximité du rotor, dans un environnement réputé hostile soumis à de fortes vibrations.

Plus particulièrement encore selon une forme de réalisation de l'invention, ledit au moins un conduit de rejet est agencé en drain isolé des chemins fluidiques par des moyens d'étanchéité interposés entre le piston et la chambre. Le conduit de rejet collecte et évacue hors de la vanne un fluide perdu issu d'un éventuel résidu de l'un au moins des fluides provenant de son infiltration à travers les moyens d'étanchéité.

Le conduit de rejet est de préférence commun à la collecte et à l'évacuation d'un fluide perdu issu de l'un et l'autre des fluides, en débouchant notamment sur une zone axialement médiane de la chambre.

Les moyens d'étanchéité sont aptes à être réduits à un couple de joints, tels que des joints à lèvres par exemple. Plus particulièrement, les moyens d'étanchéité comprennent des joints axialement interposés entre le conduit de rejet et une extrémité axiale respective de la chambre.

Un agencement du conduit de rejet en drain permet d'équiper aisément la vanne d'un dispositif d'alerte d'un dysfonctionnement de la vanne voire de l'installation hydraulique comprenant au moins une vanne de l'invention. En effet, un tel dispositif d'alerte d'un dysfonctionnement au moins de la vanne peut être avantageusement formé par des moyens d'évaluation de la quantité de fluide perdu évacuée hors du conduit de rejet.

Selon une forme avantageuse de réalisation et tel que précédemment visé, la vanne peut être équipée de moyens d'amortissement hydraulique et/ou de moyens de freinage de la mobilité du piston à l'intérieur de la chambre.

Les moyens d'amortissement hydraulique peuvent être de structures simples par mise en coopération entre des cellules ménagées en fond de chambre et aptes à recevoir respectivement des prolongements axiaux du piston ou des tronçons de piston.

De telles dispositions procurent un amortissement du déplacement du piston, le fluide présent dans les cellules opposant une contre-poussée à l'encontre d'une circulation des prolongements à l'intérieur des cellules par suite du déplacement axial du piston à l'intérieur de la chambre.

Bien évidemment, l'amplitude d'une telle contre-poussée est ajustée par la différence entre les volumes respectifs des prolongements et des cellules, et plus particulièrement par les dimensions d'un jeu ménagé entre les cellules et les prolongements coopérant, ledit jeu formant un canal d'évacuation du fluide hors des cellules vers la chambre par suite de la circulation des prolongements à l'intérieur des cellules.

Plus particulièrement, la vanne comporte avantageusement des moyens d'amortissement hydraulique de la mobilité du piston à l'intérieur de la chambre.

L'amortissement hydraulique de la mobilité axiale du piston est avantageusement procurée en excluant l'exploitation d'organes soumis à fatigue, tel qu'un organe élastiquement déformable par exemple, et en mettant à profit les fluides circulant à l'intérieur de la vanne pour procurer l'amortissement de la mobilité du piston à l'intérieur de la chambre.

Plus particulièrement, les moyens d'amortissement hydraulique sont avantageusement formés par des cellules borgnes débouchant respectivement en fond des extrémités axiales de la chambre et coopérant avec des prolongements axiaux respectifs du piston. Les cellules reçoivent respectivement lesdits prolongements par suite d'un déplacement axial du piston à l'intérieur de la chambre.

Des jeux ménagés respectivement entre les cellules et les prolongements coopérant ménagent des canaux d'évacuation contrôlée des fluides hors des cellules vers la chambre, bien évidemment par suite de la circulation à l'intérieur des cellules des prolongements avec lesquels les cellules coopèrent respectivement.

De préférence, en position axiale stabilisée du piston à l'intérieur de la chambre sous l'effet des poussées équilibrées exercées aux faces d'extrémité axiale du piston respectivement par l'un et l'autre des fluides, un écart axial est ménagé entre les obturateurs et les rampes avec lesquelles les obturateurs coopèrent respectivement.

Ledit écart axial ménage une différence de pression tolérée des fluides respectivement admis dans les deuxièmes conduits et permet d'interdire rigoureusement un passage de fluide depuis les premiers conduits vers la chambre en position sensiblement stabilisée du piston. En outre compte tenu des fortes vibrations auxquelles est soumise la vanne, il est évité des admissions inappropriées des fluides vers la chambre depuis les premiers conduits sous l'effet de mouvements du piston provoqués par de telles vibrations.

Dans ce contexte, la vanne comporte de préférence des moyens de freinage de la mobilité du piston à l'intérieur de la chambre. De telles dispositions permettent de préserver la vanne d'une usure prématurée et de participer à l'évitement desdites admissions inappropriées des fluides vers la chambre sous l'effet des vibrations auxquelles est soumise la vanne.

En outre conformément à l'architecture simple de la vanne de l'invention, lesdits moyens de freinage peuvent être avantageusement formés par l'un au moins des aménagements aisés à mettre en oeuvre suivants :
- ) une pente des rampes dont l'inclinaison par rapport à l'axe d'extension du piston est comprise entre 5° et 60°, et
- ) un montage des moyens d'étanchéité procurant leur frottement dur le long du piston sous l'effet de son déplacement axial.

On relèvera qu'un premier dispositif d'alerte d'un dysfonctionnement de la vanne peut être aisément formé par des moyens d'évaluation de la quantité de fluide perdu évacuée hors du conduit de rejet, révélatrice d'une perte d'efficacité des moyens d'étanchéité et révélatrice d'un assouplissement des moyens d'étanchéité affectant le cas échéant le freinage obtenu du piston.

En outre, la vanne peut être munie d'un deuxième dispositif d'alerte d'un dysfonctionnement de la vanne avantageusement formé par des moyens de détection de la position du piston à l'intérieur de la chambre. De tels moyens de détection sont notamment générateurs d'un signal d'alerte en cas de détection d'une course axiale du piston supérieure à une course tolérée prédéfinie.

Lesdits moyens de détection sont de préférence générateurs d'une variation dudit signal d'alerte en fonction de la position axiale du piston à l'intérieur de la chambre.

Plus particulièrement selon une forme de réalisation de l'invention aisément mise en oeuvre de par la simplicité de l'architecture de la vanne, lesdits moyens de détection sont avantageusement formés par au moins un jeu de composants coopérant par ondes, tels que par échange de radiofréquences et/ou par exploitation d'ondes magnétiques.

Lesdits moyens de détection comprennent notamment au moins un premier composant placé à une quelconque extrémité axiale du piston qui lui est affectée et un deuxième composant placé au fond de la chambre ménagé en regard de ladite quelconque extrémité axiale du piston.

Conformément à de telles dispositions, ledit au moins un premier composant est indifféremment placé à une quelconque face d'extrémité axiale du piston ou sur un quelconque desdits prolongements.

Par exemple, lesdits moyens de détection sont du type exploitant l'effet « Hall ». Le premier composant et le deuxième composant sont formés d'aimants générateurs entre eux d'un champ magnétique traversé par un troisième composant monté sur le corps de vanne et producteur d'une tension électrique génératrice dudit signal d'alerte à une tension électrique de consigne prédéfinie.

Les obturateurs équipant respectivement les premiers conduits sont notamment à surface de révolution, tels que par exemple agencés en calotte sphérique, en sphère ou en cône. Les rampes sont notamment ménagées aux extrémités respectives du piston en étant par exemple conformées en cône.

Selon une forme préférée de réalisation, chacun des premiers conduits est doté d'un siège ajouré de retenue de l'obturateur dont il est muni, à l'encontre d'une échappée de l'obturateur vers l'intérieur du premier conduit.

Une telle échappée est potentiellement provoquée sous l'effet d'une poussée exercée par le fluide présent dans la chambre en cas de surpression dudit fluide présent dans la chambre par rapport au fluide circulant dans le premier conduit.

Ces dispositions sont telles qu'une échappée de l'obturateur vers le siège ajouré interdit un passage de fluide depuis le premier conduit vers la chambre en cas de surpression du fluide présent dans la chambre. Lorsque la pression du fluide présent dans la chambre devient inférieure à la pression du fluide admis dans le premier conduit, l'obturateur est repoussé par le fluide admis dans le premier conduit vers le débouché du premier conduit sur la chambre.

Par ailleurs, la simplicité de l'architecture de la vanne autorise une implantation aisée de moyens de contrôle de son fonctionnement préalablement à sa mise en service. Plus particulièrement selon une forme de réalisation de l'invention, la vanne est munie d'un moyen de contrôle de la mobilité axiale du piston préalablement à l'admission des fluides à l'intérieur de la vanne et par suite le cas échéant de contrôle du fonctionnement des moyens de détection de la position axiale du piston à l'intérieur de la chambre.

Le piston étant de préférence subdivisé en deux tronçons de piston coaxiaux prenant axialement appui l'un contre l'autre, ledit moyen de contrôle peut être avantageusement formé par un organe élastiquement déformable axialement interposé entre les tronçons de piston en repoussant les tronçons de piston vers les fonds axiaux de la chambre respectivement en regard sur lesdits tronçons de piston.

Il est bien évidemment compris que ledit organe élastiquement déformable est exploité préalablement à la mise en service de la vanne et à son alimentation en fluide, en étant exclu des modalités de fonctionnement de la vanne en situation d'exploitation.

En effet, l'exploitation dudit organe élastiquement déformable est réalisée préalablement à l'implantation de la vanne sur le circuit hydraulique qui lui est affecté et/ou tout au moins préalablement à l'admission des fluides à l'intérieur de la vanne.

Par ailleurs, on relèvera que la subdivision du piston en deux tronçons de piston et qu'une subdivision du corps de vanne en deux blocs de corps de vanne permet de faciliter l'assemblage entre eux des composants de la vanne et permet de ménager aisément le conduit de rejet dans le corps de vanne.

La présente invention a aussi pour objet une installation hydraulique convenant à la manoeuvre d'un organe de variation d'attitude en vol d'un aéronef, et plus particulièrement dédiée à la manoeuvre en variation de pas des pales d'un rotor de giravion.

L'installation hydraulique de la présente invention comprend notamment deux circuits hydrauliques distincts interdisant une communication entre eux de fluides respectivement acheminés par les circuits hydrauliques entre des sources de fluide respectives desdits fluides et des corps de vérin double effet respectifs d'au moins une servocommande apte à provoquer une manoeuvre dudit organe de variation d'attitude en vol de l'aéronef.

Par ailleurs, chaque circuit hydraulique comprend un distributeur hydraulique régulant la circulation du fluide à travers une chambre de fond et à travers une chambre de tête d'un corps de vérin dont l'alimentation en fluide est régulée par le distributeur hydraulique d'un circuit hydraulique donné. Les distributeurs hydrauliques sont conjointement actionnables sous l'effet de commande de vol générées par un pilote de l'aéronef, indifféremment pilote humain ou pilote automatique, pour réguler simultanément la circulation des différents fluides respectivement à l'intérieur des différents corps de vérin.

Ces dispositions sont telles que classiquement un premier circuit hydraulique achemine un premier fluide entre une source du premier fluide et un premier corps de vérin par l'intermédiaire d'un premier distributeur hydraulique.

Sous dépendance de la mise en oeuvre du premier distributeur hydraulique, le premier fluide circule à travers le premier circuit hydraulique entre d'une part la source du premier fluide et d'autre part une chambre de fond et une chambre de tête du premier corps de vérin. Des voies hydrauliques du premier circuit hydraulique sont affectées à la circulation du premier fluide entre la première source de fluide et respectivement la chambre de fond et la chambre de tête du premier corps de vérin.

De même, un deuxième circuit hydraulique distinct du premier chemin hydraulique achemine un deuxième fluide entre une source du deuxième fluide et un deuxième corps de vérin par l'intermédiaire d'un deuxième distributeur hydraulique.

Sous dépendance de la mise en oeuvre du deuxième distributeur hydraulique conjointement à la mise en oeuvre du premier distributeur hydraulique, le deuxième fluide circule à travers le deuxième circuit hydraulique entre d'une part la source du deuxième fluide et d'autre part une chambre de fond et une chambre de tête du deuxième corps de vérin. Des voies hydrauliques du deuxième circuit hydraulique sont affectées à la circulation du deuxième fluide entre la deuxième source de fluide et respectivement la chambre de fond et la chambre de tête du deuxième corps de vérin.

Selon la présente invention, une telle installation hydraulique est principalement reconnaissable en ce qu'elle est équipée de vannes chacune conformes à une vanne telle qu'elle vient d'être décrite.

Une première vanne équilibre les pressions respectives des fluides circulant à travers les chambres de fond respectives de l'un et l'autre des corps de vérin. Une deuxième vanne équilibre les pressions respectives des fluides circulant à travers les chambres de tête respectives de l'un et l'autre des corps de vérin.

Plus particulièrement, les premiers conduits de chacune des vannes sont en communication fluidique en amont des distributeurs hydrauliques avec des sources de fluide respectives. Les deuxièmes conduits de chacune des vannes sont en communication fluidique en aval des distributeurs hydraulique, pour une première vanne avec les chambres de fond respectives des corps de vérin et pour une deuxième vanne avec les chambres de tête respectives des corps de vérin.

Les notions de « amont » et « aval » sont considérées par rapport à un sens de circulation des fluides depuis les sources de fluide vers les corps de vérin.

Par ailleurs, les vannes débouchent chacune à l'air libre par l'intermédiaire dudit au moins un conduit de rejet dont les vannes sont chacune munies. Plus particulièrement pour chacune des vannes, la chambre est avantageusement placée à l'air libre par l'intermédiaire dudit au moins un conduit de rejet agencé en drain et isolé des chemins fluidiques de la vanne, tel que par les moyens d'étanchéité interposés entre ledit au moins un conduit de rejet et lesdits chemins fluidiques.

Selon une forme avantageuse de réalisation, le fluide perdu collecté et évacué par ledit au moins un conduit de rejet de chacune des vannes est recueilli dans une capacité de stockage commune avantageusement munie desdits moyens d'évaluation de la quantité de fluide perdu recueillie par la capacité de stockage.

Ladite capacité de stockage collecte de préférence le fluide perdu drainé par les conduits de rejet respectifs de l'une et l'autre des vannes. Lesdits moyens d'évaluation sont par exemple des moyens de visualisation du volume intérieur de la capacité de stockage ou des moyens de détection comprenant des capteurs de mesure du volume de fluide perdu recueilli dans la capacité de stockage.

Tel que précédemment indiqué, lesdits corps de vérin peuvent être indifféremment des corps de vérin intégrés à une servocommande à multiple corps de vérin ou des corps de vérin intégrés à des servocommandes à simple corps de vérin respectives.

L'invention a aussi pour objet un aéronef à voilure tournante qui comporte au moins : une vanne du type précédemment décrit et / ou une installation hydraulique du type précédemment exposé.

Des exemples de réalisation de la présente invention vont être décrits en relation avec les figures des planches annexées, dans lesquelles :
- la figure 1 est un exemple d'architecture d'une installation hydraulique de la présente invention.
- les figures 2 à 5 sont des représentations schématiques d'une vanne selon une forme préférée de réalisation de la présente invention, illustrant les modalités de fonctionnement d'une telle vanne.
- la figure 6 est une représentation schématique d'une vanne selon un agencement particulier conforme à la présente invention,
- la figure 7 est une représentation schématique d'une vanne selon un autre agencement particulier conforme à la présente invention.

Pour une meilleure compréhension des explications qui suivent, les organes communs représentés sur les différentes figures sont respectivement identifiés dans les descriptions propres à ces figures avec les mêmes numéros et/ou lettres de référence, sans pour autant impliquer leur représentation individuelle sur chacune des figures.

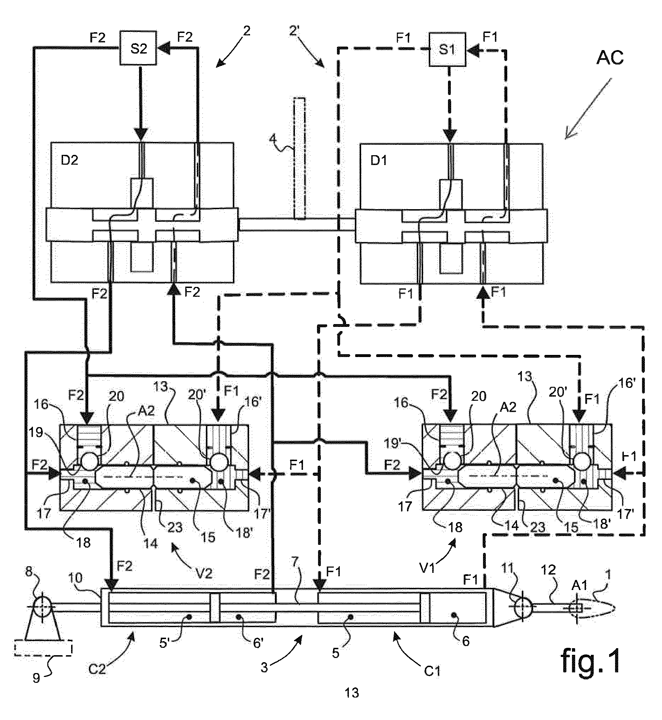

Sur la figure 1, une installation hydraulique est dédiée à la manoeuvre en pivotement des pales 1 d'un rotor d'un aéronef à voilure tournante AC. Selon cet exemple, l'aéronef à voilure tournante AC est un giravion dont les pales 1 pivotent autour de leur axe de variation de pas A1.

Classiquement, une telle installation hydraulique comprend deux circuits hydrauliques distincts 2, 2' procurant une circulation de fluides respectifs F1 et F2 entre des sources de fluides S1 et S2 affectées à l'un et l'autre des circuits hydrauliques 2, 2' et des corps de vérin C1 et C2 respectifs d'une servocommande 3.

L'installation hydraulique comprend aussi typiquement des distributeurs hydrauliques D1 et D2 chacun placés en communication fluidique avec l'un et l'autre des circuits hydrauliques 2,2'. Les distributeurs hydrauliques D1, D2 sont conjointement manoeuvrables par un organe de commande commun 4 actionné selon des commandes de vol générées par un pilote, indifféremment pilote humain ou pilote automatique.

Sur l'exemple de réalisation illustré, les distributeurs hydrauliques D1, D2 sont du type à au moins un tiroir et de préférence du type sécurisé à double-tiroir. Bien évidemment, les distributeurs hydrauliques D1, D2 peuvent être d'une quelconque autre structure procurant au moins les mêmes fonctionnalités, tels que des distributeurs hydrauliques agencés en distributeurs hydrauliques rotatifs par exemple.

Les distributeurs hydrauliques D1, D2 répartissent la circulation combinée des fluides F1, F2 à travers l'un et l'autre des circuits hydrauliques 2, 2' pour alimenter sélectivement en fluide les chambres de fond 5,5' et les chambres de tête 6,6' des différents corps de vérin C1, C2 auxquels les distributeurs hydrauliques sont respectivement affectés. Un déplacement relatif entre les corps de vérin C1, C2 et une tige 7 montée coulissante à l'intérieur des corps de vérin C1, C2 permet de provoquer une variation de pas des pales 1 du rotor.

Sur l'exemple de réalisation illustré, les corps de vérin C1, C2 sont intégrés dans un vérin hydraulique unique 10 à double corps de vérin C1, C2 de la servocommande 3. Les corps de vérin C1, C2 coopèrent conjointement avec une tige 7 commune munie de moyens d'ancrage 8 à un châssis 9 du giravion, le vérin hydraulique 10 étant muni de moyens de fixation 11 à un organe de manoeuvre 12 des pales 1 autour de leur axe individuel de variation de pas A1.

Selon une variante de réalisation possible procurant un même dit déplacement relatif entre les corps de vérin C1, C2 et la tige 7, le vérin hydraulique 10 peut inversement être muni de moyens d'ancrage au châssis du giravion et la tige 7 être munie de moyens de fixation à l'organe de manoeuvre 12 des pales 1.

Conformément à l'état de fonctionnement illustré de l'installation hydraulique, la position de fonctionnement des distributeurs hydrauliques D1, D2 provoque une admission des fluides F1, F2 respectivement dans l'une et l'autre des chambres de fond 5, 5' des corps de vérin C1, C2 par l'intermédiaire des circuits hydrauliques 2, 2' affectés à la circulation des fluides F1, F2 respectivement à travers l'un et l'autre des corps de vérin C1, C2.

Une telle admission de fluide provoque un déplacement relatif entre la tige 7 et les corps de vérin C1, C2 et par suite provoque une évacuation des fluides F1, F2 hors des chambres de tête 6, 6' des corps de vérin C1, C2 vers les sources de fluide S1, S2, via les circuits hydrauliques 2, 2' affectés à la circulation des fluides F1, F2 respectivement à travers l'un et l'autre des corps de vérin C1, C2.

Bien évidemment dans un état inverse de fonctionnement de l'installation hydraulique non illustré, une admission des fluides F1, F2 dans les chambres de tête 6, 6' des corps de vérin C1, C2 provoque une évacuation des fluides F1, F2 hors des chambres de fond 5, 5' vers les sources de fluide S1, S2.

L'installation hydraulique comprend aussi un couple de vannes V1, V2 placées l'une et l'autre sur les circuits hydrauliques 2, 2'. Une première vanne V1 procure un équilibrage entre les pressions des fluides F1, F2 circulant respectivement à travers les chambres de tête 6, 6' des corps de vérin C1, C2 et une deuxième vanne V2 procure un équilibrage entre les pressions des fluides F1, F2 circulant respectivement à travers les chambres de fond 5, 5' des corps de vérin C1, C2.

Sur les figures 1 à 7, les vannes V1, V2 comprennent chacune un corps de vanne 13 ménageant une chambre 14 de guidage en translation d'un piston 15 suivant une direction axiale A2 d'extension de la chambre 14. Des premiers conduits 16, 16' débouchent radialement sur la chambre 14, chacun à une extrémité axiale de la chambre 14 qui leur est affectée. Des deuxièmes conduits 17, 17' débouchent sur une extrémité axiale respective de la chambre 14, de sorte que les fluides F1, F2 acheminés par les deuxièmes conduits 17, 17' sont aptes à exercer des poussées axiales opposées contre le piston 15 par l'intermédiaire de ses faces d'extrémité axiale.

Les vannes V1, V2 comprennent chacune un couple de chemins fluidiques distincts, chaque chemin fluidique comprenant un premier conduit 16 ou 16' et un deuxième conduit 17 ou 17' débouchant à une même extrémité axiale de la chambre ménageant un passage 18 ou 18' de fluide entre le premier conduit 16 ou 16' et le deuxième conduit 17, 17'.

Sur la figure 1, les premiers conduits 16, 16' de chacune des vannes V1, V2 sont en communication fluidique avec une source de fluide S1, S2 respective. Les mises en communication fluidique des premiers conduits 16, 16' avec les sources de fluide S1, S2 sont réalisées en amont des distributeurs hydrauliques D1, D2 au regard d'un sens de circulation des fluides F1, F2 depuis les sources de fluide S1, S2 vers les corps de vérin C1, C2.

Les deuxièmes conduits 17, 17' de chacune des vannes V1, V2 sont en communication fluidique respectivement avec les chambres de fond 5, 5' des corps de vérin C1, C2 pour l'une des vannes V1, V2 et avec les chambres de tête 6, 6' des corps de vérin C1, C2 pour l'autre des vannes V1, V2.

Les mises en communication fluidique des deuxièmes conduits 17, 17' avec les chambres des corps de vérin C1, C2 sont réalisées en aval des distributeurs hydrauliques D1, D2 au regard d'un sens de circulation des fluides depuis les sources de fluide S1, S2 vers les corps de vérin C1, C2.

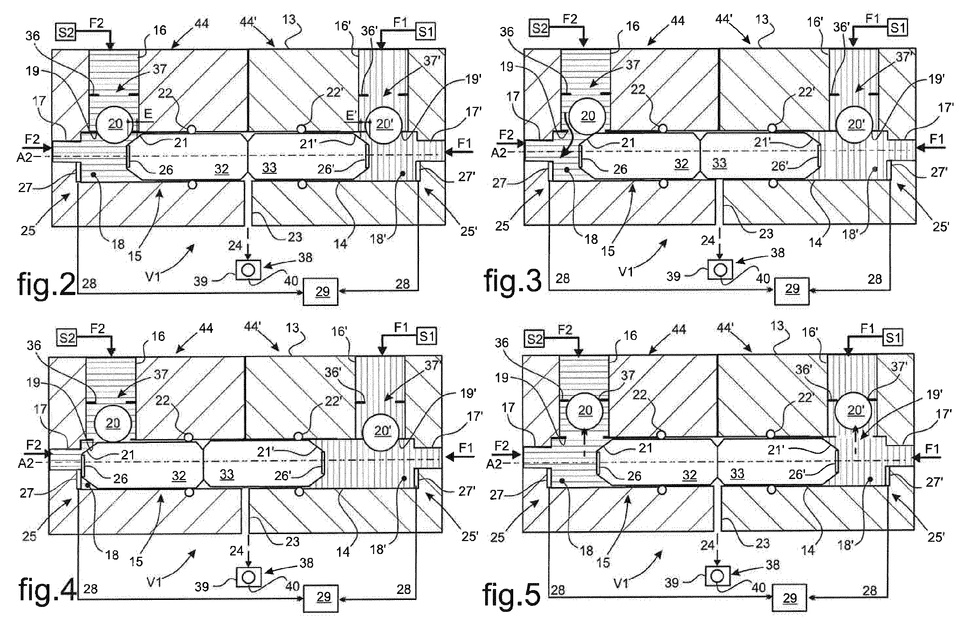

Plus spécifiquement sur les figures 2 à 7 pour une quelconque vanne donnée V1 ou V2 (une seule vanne V1 illustrée sur les figures 2 à 7), le débouché 19, 19' de chacun des premiers conduits 16, 16' sur la chambre 14 est muni d'un obturateur 20, 20' interdisant une circulation des fluides F1, F2 depuis les premiers conduits 16, 16' vers la chambre 14 sous l'effet de la pression des fluides F1, F2 acheminés depuis les sources de fluide S1, S2 vers les premiers conduits 16,16'.

Par ailleurs, le piston 15 comporte à ses extrémités axiales respectives des rampes 21, 21' de poussée des obturateurs 20, 20' vers l'intérieur des premiers conduits 16, 16' dont les obturateurs 20, 20' obturent respectivement les débouchés 19, 19' sur la chambre 14.

Ces dispositions sont telles qu'un déplacement axial du piston 15 à l'intérieur de la chambre 14 provoque une prise d'appui glissant de l'un ou l'autre des obturateurs 20, 20' le long de la rampe 21, 21' qui lui est affectée selon le sens de déplacement axial du piston 15 à l'intérieur de la chambre 14. Une telle prise d'appui glissant a pour effet de repousser l'obturateur 20, 20' vers l'intérieur du premier conduit 16, 16' et par suite de libérer au moins partiellement le débouché 19, 19' du premier conduit 16, 16' de son obturation par l'obturateur 20, 20'.

Le dégagement obtenu du débouché 19, 19' du premier conduit 16, 16' autorise alors une circulation du fluide F1, F2 admis à l'intérieur du premier conduit 16, 16' vers le deuxième conduit 17, 17' débouchant sur le même passage 18, 18' sur lequel débouche par ailleurs le premier conduit 16, 16'.

Par ailleurs, les passages 18, 18' respectivement ménagés par les extrémités axiales de la chambre 14 sont isolés l'un de l'autre d'une mise en communication fluidique entre eux par des moyens d'étanchéité 22, 22'. De tels moyens d'étanchéité 22, 22' sont formés d'un couple de joints respectivement interposés entre lesdits passages 18, 18' et un conduit de rejet 23 débouchant sur la chambre 14 en zone axialement médiane de la chambre 14.

On notera que les conditions de frottement des moyens d'étanchéité 22, 22' le long du piston 15 ou de la chambre 14 peuvent être mises à profit pour freiner le déplacement du piston 15 et ainsi éviter de brusques déplacements du piston 15 et des variations brutales de pression des fluides F1, F2 respectivement admis à l'intérieur de l'un et l'autre des passages 18, 18'.

Un tel conduit de rejet 23 est constitué d'un drain collectant d'éventuels résidus de fluide s'infiltrant à travers les moyens d'étanchéité 22, 22' sous l'effet des déplacements répétés en translation du piston 15. De tels résidus de fluide sont perdus, le fluide perdu 24 collecté par le conduit de rejet 23 étant évacué vers l'extérieur de la vanne V1, V2, le conduit de rejet 23 débouchant à l'air libre.

Par ailleurs, le corps de vanne 13 est de préférence axialement subdivisé en deux blocs 44, 44' de corps de vanne assemblés l'un à l'autre. Les blocs 44, 44' ménagent respectivement l'un et l'autre des chemins fluidiques et des tronçons de chambre coaxiaux composant la chambre 14.

Le piston 15 est potentiellement formé d'un ensemble monobloc guidé en mobilité axialement conjointement par les tronçons de chambre. Cependant sur l'exemple préféré de réalisation illustré, le piston 15 est subdivisé en deux tronçons de piston 32, 33 prenant axialement appui l'un contre l'autre.

En se reportant successivement sur les figures 2 et 3, la vanne V1 est apte à équilibrer entre elles les pressions des fluides F2, F1 respectivement acheminés vers les deuxièmes conduits 17, 17' et par suite permet d'équilibrer les efforts de poussée exercés sur la tige 7 par les fluides F1, F2 respectivement admis dans l'un et l'autre des corps de vérin C1, C2 tel qu'illustré sur la figure 1.

Plus particulièrement sur la figure 2, le piston 15 est en position axiale stabilisée à l'intérieur de la chambre 14, sous l'effet des poussées axiales respectivement exercées contre les faces d'extrémité axiale du piston 15 par les fluides F1, F2 respectivement admis à l'intérieur de l'un et l'autre des deuxièmes conduits 17, 17'. Une position axiale stabilisée du piston 15 est procurée en raison de l'équilibre entre elles des pressions des fluides F1, F2 respectivement admis à l'intérieur de l'un et l'autre des deuxièmes conduits 17, 17'.

Dans cette situation, les obturateurs 20, 20' sont chacun appliqués contre les débouchés 19, 19' sur la chambre 14 des premiers conduits 16, 16' les logeant respectivement. Les débouchés 19, 19' des premiers conduits 16, 16' étant totalement obturés par les obturateurs 20, 20', une circulation des fluides F1, F2 admis à l'intérieur des premiers conduits 16, 16' vers la chambre 14 est interdite.

En position stabilisée du piston, des écarts axiaux E, E' sont ménagés entre les rampes 21, 21' et les obturateurs 20, 20' coopérant respectivement avec les rampes 21, 21'.

De tels écarts axiaux E, E' permettent de certifier en position stabilisée du piston 15 la prise d'appui étanche des obturateurs 20, 20' contre les débouchés 19, 19' des premiers conduits 16, 16'.

Lesdits écarts axiaux E, E' autorisent aussi une différence de pression tolérée des fluides F1, F2 circulant respectivement à l'intérieur des différents chemins fluidiques 16, 17, 18 ou 16', 17', 18'. De telles dispositions permettent d'éviter des manoeuvres soutenues et inopportunes du piston 15 visant à corriger de faibles écarts de pression entre les fluides F1, F2 respectivement admis vers les deuxièmes conduits 17, 17'.

De surcroît la vanne, prévue pour être implantée à bord du giravion dans l'environnement proche du rotor, est particulièrement soumise à de fortes vibrations. De telles vibrations sont susceptibles de provoquer des oscillations aléatoires du piston 15 suivant sa mobilité axiale. Dans ces conditions, lesdits écarts axiaux E, E' permettent de filtrer des mouvements inopportuns du piston 15 provoqués par les vibrations auxquelles est soumise la vanne.

On relèvera que de tels écarts axiaux E, E' sont aussi mis à profit pour freiner et stabiliser le déplacement en translation du piston 15 préalablement à la prise d'appui glissant des obturateurs 20, 20' contre les rampes 21, 21' avec lesquelles les obturateurs 20, 20' coopèrent respectivement. Les obturateurs 20, 20' et les rampes 21, 21' sont ainsi préservés d'une prise de contact brutale entre eux et des manoeuvres soutenues et inutiles des obturateurs 20, 20' par le piston 15 sont évitées.

Sur la figure 3, une surpression du fluide F1 admis dans l'un des deuxièmes conduits 17, 17' par rapport à la pression du fluide F2 admis dans l'autre des deuxièmes conduits 17, 17' provoque un déplacement en translation du piston 15.

L'obturateur 20 dont est muni le premier conduit 16 situé à l'opposé axial du deuxième conduit 17 en surpression prend alors un appui glissant contre la rampe 21 avec laquelle l'obturateur 20 coopère, avec pour effet de libérer au moins partiellement le débouché 19 du premier conduit 16 logeant l'obturateur 20.

Le premier conduit 16 dont le débouché 19 est dégagé est alors placé en communication fluidique avec la chambre 14. Dans cette situation, le fluide F2 admis dans le premier conduit 16 dont le débouché 19 est dégagé circule vers le passage 18 sur lequel débouche ce premier conduit 16, avec pour effet d'augmenter la pression du fluide F2 présent dans ce passage 18. Le piston 15 est alors repoussé en translation jusqu'à parvenir en position stabilisée lorsque l'équilibre entre elles des pressions des fluides F1, F2 respectivement admis à l'intérieur des deuxièmes conduits 17, 17' est rétablie.

Sur les figures 2 à 7, la vanne V1 est munie de moyens de détection 25, 25' de la position axiale du piston 15 à l'intérieur de la chambre 14.

Sur les exemples de réalisation illustrés, de tels moyens de détection 25, 25' sont du type à échange d'ondes entre au moins deux composants 26, 26' et 27, 27' d'au moins un jeu de composants installé à une quelconque des extrémités axiales de la chambre 14 et du piston 15.

Un premier composant 26, 26' est installé à l'une des extrémités axiales du piston 15 et un deuxième composant 27 est installé en fond axial de la chambre 14 en regard sur l'extrémité axiale du piston 15 munie du premier composant 26, 26'. Les moyens de détection 25, 25' comprennent de préférence deux jeux de composants dont les composants 26, 26' et 27, 27' sont respectivement placés à l'une et l'autre des extrémités axiales du piston 15 et à l'un et l'autre des fonds axiaux de la chambre 14.

Tel qu'illustré sur la figure 4, une course en translation excessive du piston 15 au regard d'une course tolérée prédéfinie du piston 15 génère un signal d'alerte 28 par mise en coopération entre eux des composants 26, 26' et 27, 27' d'un jeu de composants.

Un tel signal d'alerte 28 est transmis à des moyens de signalisation 29, tel que mettant en oeuvre un voyant lumineux par exemple indiquant au pilote du giravion un dysfonctionnement potentiel de l'installation hydraulique.

Plus particulièrement, une course excessive du piston 15 est révélatrice d'un dysfonctionnement potentiel de l'un au moins des organes hydrauliques de l'installation hydraulique. En effet, une course excessive du piston 15 est révélatrice d'une différence de pression excessive entre les fluides admis dans les chambres de fond 5, 5' et dans les chambres de tête 6, 6' de l'un et l'autre des corps de vérin C1, C2.

Il est à prendre en compte, tel qu'illustré sur la figure 1, que les premiers conduits 16, 16' des vannes V1, V2 sont de préférence en communication fluidique avec les sources de fluide S1, S2 en amont des distributeurs hydrauliques D1, D2 et que les deuxièmes conduits 17, 17' des vannes V1, V2 sont en communication fluidique avec respectivement les chambres de fond 5, 5' ou les chambres de tête 6, 6' de l'un et l'autre des corps de vérin C1, C2.

Dans ces conditions, les moyens de détection 25, 25' équipant les vannes V1, V2 sont aptes à signaler un dysfonctionnement de l'un quelconque au moins des organes hydrauliques de l'installation hydraulique, ayant pour effet de générer une différence de pression entre les fluides F1, F2 respectivement admis dans les chambres de tête 6, 6' et/ou dans les chambres de fond 5, 5' de l'un et l'autre des corps de vérin C1, C2.

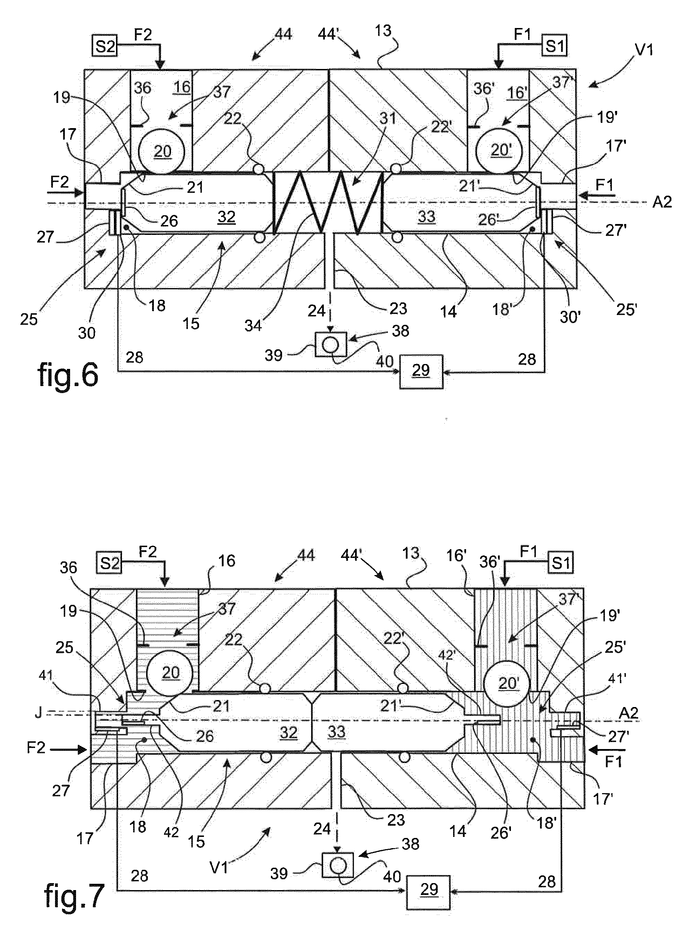

Sur l'exemple de réalisation représenté sur la figure 6, les moyens de détection 25, 25' comprennent au moins un jeu de composants coopérant entre eux par effet « Hall ». Chaque jeu de composants comprend un dit premier composant 26, 26' installé sur le piston 15 et un dit deuxième composant 27, 27' installé en fond de chambre 14 à la manière de la forme de réalisation illustrée sur les figures 2 à 5.

Le premier composant 26, 26' et le deuxième composant 27, 27' sont formés d'aimants coopérant en eux pour générer un champ magnétique traversant un troisième composant 30, 30' installé sur le corps de vanne 13. Le troisième composant 30, 30' génère alors une tension électrique dont est issu le signal d'alerte 28. L'intensité du signal d'alerte 28 peut varier selon la variation de la tension électrique générée par le troisième composant 30 en fonction de l'éloignement entre eux du premier composant 26, 26' et du deuxième composant 27, 27' révélateur de la position axiale du piston 15.

De telles dispositions permettent de donner une information variable au pilote sur l'état de fonctionnement des vannes V1, V2 et donc de l'installation hydraulique.

Par ailleurs conformément à l'exemple de réalisation illustré sur la figure 6, les vannes V1, V2 sont munies chacune d'un moyen de contrôle de la mobilité axiale du piston 15 préalablement à l'admission des fluides F1, F2 à l'intérieur des vannes V1, V2. Un tel moyen de contrôle 31 est notamment mis en oeuvre en sortie d'atelier de fabrication de la vanne V1, ou tout au moins préalablement au montage de la vanne V1 sur l'installation hydraulique.

Ledit moyen de contrôle 31 est formé par la subdivision du piston 15 en deux tronçons de piston 32, 33 suivant son extension axiale et par un organe élastiquement déformable 34, tel qu'agencé en ressort de compression, interposé axialement entre les deux tronçons 32, 33 de piston.

Ces dispositions sont telles que les deux tronçons de piston 32, 33 prennent axialement appui l'un contre l'autre par l'intermédiaire de l'organe élastiquement déformable 34. En l'absence d'admission de fluides F1, F2 dans la vanne V1, l'organe élastiquement déformable 34 repousse l'un et l'autre des tronçons de piston 32, 33 en fonds axiaux respectifs de la chambre 14, avec pour effet d'activer les moyens de détection 25, 25'. Un signal d'alerte 28 alors généré par les moyens de détection 25, 25' révèle l'aptitude satisfaisante du piston 15 composé des deux tronçons de piston 32, 33 à se déplacer axialement sans obstacle majeur à l'intérieur de la chambre 14.

Bien évidemment, ledit organe élastiquement déformable 34 est taré à un effort de poussée axiale juste suffisant pour déplacer les tronçons de piston 32, 33 à l'encontre de son frottement à l'intérieur de la chambre en l'absence d'alimentation en fluides F1, F2 de la vanne V1. Lorsque la vanne V1 est alimentée en fluides F1, F2, les fluides F1, F2 admis à l'intérieur des passages 18, 18' repoussent axialement les tronçons de piston 32, 33 l'un vers l'autre à l'encontre des efforts antagonistes exercés par l'organe élastiquement déformable 34 contre les tronçons de piston 32, 33.

Il est donc à relever que l'organe élastiquement déformable 34 est inopérant en situation d'exploitation de la vanne V1 implantée sur l'installation hydraulique et en cela que l'organe élastiquement déformable 34 ne peut pas être la cause d'un éventuel dysfonctionnement de la vanne V1.

On notera aussi qu'indépendamment de l'équipement de la vanne V1 par ledit moyen de contrôle 25, 25', une subdivision du piston 15 en deux tronçons de piston 32, 33 et du corps de vanne 13 en deux blocs 44, 44' de corps de vanne permet d'éviter une propagation de criques de l'un à l'autre des blocs 44, 44' et facilite l'assemblage des éléments constitutifs de la vanne V1 en participant à la simplicité de sa structure.

Sur les exemples de réalisation illustrés sur les figures 1 à 7, les obturateurs 20, 20' équipant les débouchés 19, 19' respectifs des premiers conduits 16, 16' sont agencés chacun en sphère. Pour chacun des premiers conduits 16, 16', l'obturateur 20, 20' est monté mobile vers l'intérieur de l'extrémité du premier conduit 16, 16' débouchant sur la chambre 14, entre le débouché 19, 19' du premier conduit 16, 16' sur la chambre 14 et un siège ajouré 36, 36' de retenue de l'obturateur 20, 20' équipant le premier conduit 16, 16'.

Tel qu'illustré sur la figure 5 et en considérant un premier conduit 16, 16' donné, le siège ajouré 36, 36' comporte par exemple une ouverture 37, 37' ménagée à son travers. Le fluide F1, F2 admis à l'intérieur du premier conduit 16, 16' est apte à circuler à travers ladite ouverture 37, 37' depuis le premier conduit 16, 16' vers la chambre 14. Le siège ajouré 36, 36' forme une butée de retenue de l'obturateur 20, 20' à l'encontre de son échappée vers l'intérieur du premier conduit 16, 16'. Une telle échappée est potentiellement provoquée sous l'effet d'une poussée exercée par le fluide F1, F2 présent dans la chambre 14 en cas de surpression de ce fluide F1, F2 par rapport au fluide F1, F2 admis dans le premier conduit 16 depuis la source de fluide S1, S2 qui lui est affectée.

Une telle situation peut intervenir dans le cadre d'un fonctionnement correct de l'installation hydraulique. Cependant dans ce cas, le fonctionnement de la vanne V1, V2 est inhibé ce qui n'est pas souhaitable même si une inhibition du fonctionnement de la vanne V1, V2 n'interdit pas un fonctionnement correct de la servocommande 3.

Pour éviter qu'une telle situation d'inhibition de la vanne perdure, un refoulement de l'obturateur 20, 20' vers le siège ajouré 36, 36' procure une obturation de l'ouverture 37, 37' du siège ajouré 36, 36' par l'obturateur 20, 20', et par suite interdit une admission de fluide depuis le premier conduit 16, 16' vers la chambre 14.

Lorsque la pression du fluide F1, F2 admis depuis le deuxième conduit 17, 17' vers le passage 18, 18' sur lequel débouche le premier conduit 16, 16' est inférieure à la pression du fluide F1, F2 admis vers le premier conduit 16, 16', l'obturateur 20, 20' est repoussé vers le débouché 19, 19' du premier conduit 16, 16' sur la chambre 14 par le fluide F1, F2 admis dans le premier conduit 16, 16' et circulant alors à travers l'ouverture 37, 37' du siège ajouré 36, 36'.

En revenant aux figures 2 à 7, la vanne V1 est en outre équipée d'un dispositif d'alerte 38 d'un éventuel dysfonctionnement de la vanne V1 en raison d'une usure excessive des moyens d'étanchéité 22, 22'. Plus particulièrement, le conduit de rejet 23 débouche à l'air libre sur une capacité de stockage 39 collectant le fluide perdu 24 recueilli par le conduit de rejet 23.

La capacité de stockage 39 comporte un moyen d'évaluation 40 de la quantité de fluide perdu 24 recueillie, tel que par exemple formé par une fenêtre équipant la capacité de stockage 39. Une telle fenêtre peut être mise à profit pour permettre à un opérateur au cours d'une opération de maintenance de vérifier l'état de fonctionnement de la vanne V1 et plus particulièrement l'état d'usure des moyens d'étanchéité 22, 22'.

Sur la figure 7, la vanne est de préférence munie de moyens d'amortissement hydraulique de la mobilité du piston 15 à l'intérieur de la chambre 14.

A cet effet, des cellules 41, 41' borgnes sont ménagées en fond de chacune des extrémités axiales de la chambre 14. Les cellules 41, 41' débouchent chacune à une extrémité respective de la chambre 14. Plus particulièrement, les cellules 41, 41' débouchent sur les passages 18, 18' de fluide à partir desquels les cellules 41, 41' sont alimentées en fluide.

Les cellules 41, 41' coopèrent avec des prolongements 42, 42' axiaux respectifs du piston 15, lesdits prolongements 42, 42' étant ménagés en saillie axiale aux extrémités respectives du piston 15 en regard sur les cellules 41, 41'. Plus particulièrement dans le cas préféré où le piston 15 est subdivisé en deux tronçons de piston 32, 33 respectifs tel qu'illustré, les prolongements 42, 42' sont respectivement ménagés aux extrémités des tronçons de piston 32, 33 en regard sur les cellules 41, 41' avec lesquelles les prolongements 42, 42' coopèrent respectivement.

Pour un sens donné de déplacement axial du piston 15 à l'intérieur de la chambre 14 tel qu'illustré pour exemple sur la figure 7, l'un des prolongements 42 circule à l'intérieur de la cellule 41 avec laquelle le prolongement 42 coopère. L'introduction du prolongement 42 à l'intérieur de la cellule 41 est freiné par le fluide présent dans la cellule 41 opposant une contre-poussée à l'encontre de la circulation du prolongement 42 à l'intérieur de la cellule 41, et par suite opposant une contre poussée à l'encontre du déplacement du piston 15.

Le fluide présent dans la cellule 41 est progressivement chassé vers la chambre 14, et plus particulièrement vers le passage 18 interposé entre le premier conduit 16 et le deuxième conduit 17, au fur et à mesure du déplacement du piston 15 et par suite de la pénétration progressive du prolongement 42 à l'intérieur de la cellule 41.

A cet effet il est prévu des canaux d'évacuation du fluide hors de cellules 41 vers la chambre 14. Sur l'exemple préféré de réalisation illustré participant à une simplification de la structure de la vanne, les canaux d'évacuation du fluide hors des cellules sont avantageusement formés par un jeu dimensionnel J ménagé entre les prolongements 42 et les cellules 41 respectivement coopérant.

Par ailleurs sur l'exemple de réalisation illustré sur la figure 7, les premiers composants 26, 26' desdits moyens de détection 25 peuvent être respectivement implantés sur les prolongements 42, 42' et les deuxièmes composants 27, 27' desdits moyens de détection 25 peuvent être respectivement implantés sur les parois délimitant les cellules 41, 41'.

L'invention n'est évidemment pas limitée aux modes de réalisation décrits. Elle est limitée uniquement par les revendications annexées.

## Revendications

1. Vanne (V1, V2) convenant à l'équilibrage entre les pressions de différents fluides (F1, F2) circulant respectivement à l'intérieur d'une pluralité de corps de vérin (C1, C2) double effet d'au moins une servocommande (3) apte à manoeuvrer un organe (1) de variation d'attitude en vol d'un aéronef, ladite vanne (V1, V2) comprenant un corps de vanne (13) comportant au moins :
- ) une chambre (14) de guidage en translation d'un piston (15) suivant une direction axiale (A2) d'extension de la chambre (14),
- ) deux premiers conduits (16, 16') débouchant sur la chambre (14) et affectés chacun à la circulation d'un fluide (F1, F2) respectif entre l'extérieur et l'intérieur de la vanne (V1, V2),
- ) deux passages (18, 18') d'acheminement individuel desdits fluides (F1, F2) à l'intérieur de la vanne (V1, V2) respectivement entre les premiers conduits (16, 16') et des deuxièmes conduits (17, 17') débouchant chacun sur la chambre (14) et affectés à la circulation d'un fluide (F1, F2) respectif entre l'extérieur et l'intérieur de la vanne (V1, V2),
- ) au moins un conduit de rejet (23) des fluides (F1, F2) admis à l'intérieur de la chambre (14),
des chemins fluidiques de la vanne (V1, V2), acheminant respectivement les fluides (F1, F2) comprenant chacun distinctement au moins un dit premier conduit (16, 16'), un dit passage (18, 18') et un dit deuxième conduit (17, 17') placés en communication fluidique entre eux,
**caractérisée en ce que**, pour chacun desdits chemins fluidiques, le premier conduit (16, 16') est muni à son débouché (19, 19') sur la chambre (14) d'un obturateur mobile (20, 20') coopérant avec une rampe (21, 21') ménagée sur le piston (15), un glissement de l'obturateur (20, 20') le long de la rampe (21, 21') provoqué sous l'effet d'un déplacement en translation du piston (15) à l'intérieur de la chambre (14) dégageant le débouché (19, 19') du premier conduit (16, 16') et par suite plaçant le premier conduit (16, 16') et le deuxième conduit (17, 17') en communication fluidique entre eux à travers ledit passage (18, 18'), ladite mise en communication fluidique entre le premier conduit (16, 16') et le deuxième conduit (17, 17') fournissant un apport de fluide (F1, F2) à travers le passage (18) depuis le premier conduit (16, 16') vers le deuxième conduit (17, 17').

2. Vanne selon la revendication 1,
**caractérisée en ce que**, pour chacun desdits chemins fluidiques, le passage (18, 18') est formé par un tronçon d'extrémité axiale de la chambre (14) sur lequel débouchent le premier conduit (16, 16') et le deuxième conduit (17, 17').

3. Vanne selon l'une quelconque des revendications 1 et 2,
**caractérisée :**
**en ce que** le corps de vanne (13) est subdivisé en deux blocs (44, 44') de corps de vanne axialement assemblés entre eux, lesdits blocs (44, 44') ménageant respectivement les chemins fluidiques en comportant des tronçons de chambre respectifs coaxiaux, et
**en ce que** le piston (15) est subdivisé en deux tronçons de piston (32,33) structurellement distincts, les tronçons de piston (32,33) étant logés respectivement dans les tronçons de chambre en prenant axialement appui l'un contre l'autre.

4. Vanne selon l'une quelconque des revendications 1 à 3, **caractérisée en ce que** ledit au moins un conduit de rejet (23) est agencé en drain isolé des chemins fluidiques par des moyens d'étanchéité (22, 22') interposés entre le piston (15) et la chambre (14), le conduit de rejet (23) collectant et évacuant hors de la vanne (V1, V2) un fluide perdu (24) issu d'un éventuel résidu de l'un au moins des fluides (F1, F2) provenant de son infiltration à travers les moyens d'étanchéité (22, 22').

5. Vanne selon la revendication 4,
**caractérisée en ce que** le conduit de rejet (23) est commun à la collecte et à l'évacuation d'un fluide perdu (24) issu de l'un et l'autre des fluides (F1, F2).

6. Vanne selon l'une quelconque des revendications 4 et 5,
**caractérisée en ce que** les moyens d'étanchéité (22, 22') comprennent des joints axialement interposés entre le conduit de rejet (23) et une extrémité axiale respective de la chambre (14).

7. Vanne selon l'une quelconque des revendications 4 à 6,
**caractérisée en ce qu'**un dispositif d'alerte (38) d'un dysfonctionnement de la vanne (V1, V2) est formé par des moyens d'évaluation (40) de la quantité de fluide perdu (24) évacuée hors du conduit de rejet (23).

8. Vanne selon l'une quelconque des revendications 1 à 7,
**caractérisée en ce que** la vanne (V1, V2) comporte des moyens d'amortissement hydraulique de la mobilité du piston (15) à l'intérieur de la chambre (14).

9. Vanne selon la revendication 8,
**caractérisée en ce que** les moyens d'amortissement hydraulique sont formés par des cellules (41,41') borgnes débouchant respectivement en fond des extrémités axiales de la chambre (14) et coopérant avec des prolongements (42, 42') axiaux respectifs du piston (15), les cellules (41, 41') recevant respectivement lesdits prolongements (42, 42') par suite d'un déplacement axial du piston (15) à l'intérieur de la chambre (14) et des jeux (J) ménagés respectivement entre les cellules (41, 41') et les prolongements (42, 42') coopérant ménageant des canaux (43, 43') d'évacuation contrôlée des fluides (F1, F2) hors des cellules (41, 41') vers la chambre (14).

10. Vanne selon l'une quelconque des revendications 1 à 9,
**caractérisée en ce qu'**en position axiale stabilisée du piston (15) à l'intérieur de la chambre (14) sous l'effet des poussées équilibrées exercées aux faces d'extrémité axiale du piston (15) respectivement par l'un et l'autre des fluides (F1, F2), un écart axial (E, E') est ménagé entre les obturateurs (20, 20') et les rampes (21, 21') avec lesquelles les obturateurs (20, 20') coopèrent respectivement.

11. Vanne selon l'une quelconque des revendications 1 à 10,
**caractérisée en ce que** la vanne (V1, V2) comporte des moyens de freinage de la mobilité du piston (15) à l'intérieur de la chambre (14).

12. Vanne selon la revendication 11,
**caractérisée en ce que** lesdits moyens de freinage sont formés par l'un au moins des aménagements suivants :
- ) une pente des rampes (21, 21') dont l'inclinaison par rapport à l'axe d'extension (A2) du piston (15) est comprise entre 5° et 60°, et
- ) un montage des moyens d'étanchéité (22, 22') procurant leur frottement sur le long du piston (15) sous l'effet de son déplacement axial.

13. Vanne selon l'une quelconque des revendications 1 à 12, **caractérisée en ce que** la vanne (V1, V2) est munie de moyens de détection (25, 25') de la position du piston (15) à l'intérieur de la chambre (14), lesdits moyens de détection (25, 25') étant générateurs d'un signal d'alerte (28) en cas de détection d'une course axiale du piston (15) supérieure à une course tolérée prédéfinie.

14. Vanne selon la revendication 13,
**caractérisée en ce que** les moyens de détection (25, 25') sont générateurs d'une variation dudit signal d'alerte (28) en fonction de la position axiale du piston (15) à l'intérieur de la chambre (14).

15. Vanne selon l'une quelconque des revendications 13 et 14,
**caractérisée en ce que** les moyens de détection (25, 25') sont formés par au moins un jeu de composants coopérant par ondes et comprenant au moins un premier composant (26, 26') placé à une quelconque extrémité axiale du piston (15) qui lui est affectée et un deuxième composant (27, 27') placé au fond de la chambre (14) ménagé en regard de ladite quelconque extrémité axiale du piston (15).

16. Vanne selon la revendication 15,
**caractérisée en ce que** ledit au moins un premier composant (26, 26') est indifféremment placé à une quelconque face d'extrémité axiale du piston (15) ou sur un quelconque desdits prolongements (42, 42').

17. Vanne selon l'une quelconque des revendications 15 et 16,
**caractérisée en ce que** les moyens de détection étant du type exploitant l'effet « Hall », le premier composant (26, 26') et le deuxième composant (27, 27') sont formés d'aimants générateurs entre eux d'un champ magnétique traversé par un troisième composant (30, 30') monté sur le corps de vanne (13) et producteur d'une tension électrique génératrice dudit signal d'alerte (28) à une tension électrique de consigne prédéfinie.

18. Vanne selon l'une quelconque des revendications 1 à 17,
**caractérisée en ce que** les obturateurs (20, 20') sont à surface de révolution et **en ce que** les rampes (21, 21') sont ménagées aux extrémités respectives du piston (15).

19. Vanne selon l'une quelconque des revendications 1 à 18,
**caractérisée en ce que** chacun des premiers conduits (16, 16') est doté d'un siège ajouré (36, 36') de retenue de l'obturateur (20, 20') dont il est muni, à l'encontre d'une échappée de l'obturateur (20, 20') vers l'intérieur du premier conduit (16, 16') sous l'effet d'une poussée exercée par le fluide (F1, F2) présent dans la chambre (14) en surpression par rapport au fluide (F1, F2) admis dans le premier conduit (16, 16').

20. Vanne selon l'une quelconque des revendications 1 à 19,
**caractérisée en ce que** la vanne (V1, V2) est munie d'un moyen de contrôle (31) de la mobilité axiale du piston (15) préalablement à l'admission des fluides (F1, F2) à l'intérieur de la vanne (V1, V2).

21. Vanne selon la revendication 20,
**caractérisée en ce que**, le piston (15) étant subdivisé en deux tronçons de piston (32,33) coaxiaux prenant axialement appui l'un contre l'autre, ledit moyen de contrôle (31) est formé par un organe élastiquement déformable (34) axialement interposé entre les tronçons de piston (32,33) en les repoussant vers les fonds axiaux de la chambre (14) respectivement en regard sur lesdits tronçons de piston (32, 33).

22. Installation hydraulique convenant à la manoeuvre d'un organe (1) de variation d'attitude en vol d'un aéronef, l'installation hydraulique comprenant deux circuits hydrauliques distincts (2, 2') interdisant une communication entre eux de fluides (F1, F2) respectivement acheminés par les circuits hydrauliques (2, 2') entre des sources de fluide (S1, S2) respectives desdits fluides (F1, F2) et des corps de vérin (C1, C2) double effet respectifs d'au moins une servocommande (3) apte à provoquer une manoeuvre dudit organe (1) de variation d'attitude en vol d'un aéronef, chaque circuit hydraulique (2, 2') comprenant un distributeur hydraulique (D1, D2) régulant la circulation du fluide (F1, F2) à travers une chambre de fond (5, 5') et à travers une chambre de tête (6, 6') d'un corps de vérin (C1, C2) dont l'alimentation en fluide (F1, F2) est régulée par le distributeur hydraulique (D1, D2) d'un circuit hydraulique (2, 2') donné, les distributeurs hydrauliques (D1, D2) étant conjointement actionnables sous l'effet de commande de vol générées par un pilote de l'aéronef et régulant simultanément la circulation des différents fluides (F1, F2) à l'intérieur des corps de vérin (C1, C2),
**caractérisée en ce que** l'installation hydraulique est équipée de vannes (V1, V2) chacune conformes à une vanne selon l'une quelconque des revendications 1 à 21, une première vanne (V1) équilibrant les pressions respectives des fluides (F1, F2) circulant à travers les chambres de fond (5, 5') respectives de l'un et l'autre des corps de vérin (C1, C2) et une deuxième vanne (V2) équilibrant les pressions respectives des fluides (F1, F2) circulant à travers les chambres de tête (6, 6') respectives de l'un et l'autre des corps de vérin (C1, C2).

23. Installation hydraulique selon la revendication 22,
caractérisée, les notions de « amont » et « aval » étant considérées par rapport à un sens de circulation des fluides (F1, F2) depuis les sources de fluide (S1, S2) vers les corps de vérin (C1, C2),
en ce que les premiers conduits (16, 16') de chacune des vannes (V1, V2) sont en communication fluidique en amont des distributeurs hydrauliques (D1, D2) avec des sources de fluide (S1, S2) respectives,
en ce que les deuxièmes conduits (17, 17') de chacune des vannes (V1, V2) sont en communication fluidique en aval des distributeurs hydrauliques (D1, D2), pour une première vanne (V1) avec les chambres de fond (5, 5') respectives des corps de vérin (C1, C2) et pour une deuxième vanne (V2) avec les chambres de tête (6, 6') respectives des corps de vérin (C1, C2), et
en ce que les vannes (V1, V2) débouchent chacune à l'air libre par l'intermédiaire dudit au moins un conduit de rejet (23) dont les vannes (V1, V2) sont chacune munies.

24. Installation hydraulique selon la revendication 23,
**caractérisée en ce que** le fluide perdu (24) collecté et évacué par le dit au moins un conduit de rejet (23) de chacune des vannes (V1, V2) est recueilli dans une capacité de stockage (39) commune munie desdits moyens d'évaluation (40) de la quantité de fluide perdu (24) recueillie par la capacité de stockage (39).

25. Installation hydraulique selon l'une quelconque des revendications 22 à 24,
**caractérisée en ce que** les corps de vérin (C1, C2) sont indifféremment des corps de vérin (C1, C2) intégrés à une servocommande (3) à multiple corps de vérin ou des corps de vérin (C1, C2) intégrés à des servocommandes (3) à simple corps de vérin respectives.

26. Aéronef (AC), **caractérisé en ce que** ledit aéronef comporte au moins : une vanne (V1, V2) selon l'une des revendications 1 à 21 et / ou une installation hydraulique selon l'une des revendications 22 à 25.

## Patentansprüche

1. Ventil (V1, V2) zum Ausgleich zwischen den Drücken verschiedener Fluide (F1, F2), die jeweils im Inneren einer Mehrzahl von doppelt wirkenden Zylinderkörpern (C1, C2) mindestens einer Servosteuerung (3) fließen, die ein Element (1) zur Änderung des Flugverhaltens eines Luftfahrzeugs betätigen kann, wobei das Ventil (V1, V2) einen Ventilkörper (13) aufweist, der mindestens umfasst:
- ) eine Kammer (14) zur translatorischen Steuerung eines Kolbens (15) entlang einer axialen Erstreckungsrichtung (A2) der Kammer (14),
- ) zwei erste Leitungen (16, 16'), die in der Kammer (14) münden, und jeweils einer Bewegung eines jeweiligen Fluids (F1, F2) zwischen dem Außenraum und dem Inneren des Ventils (V1, V2) ausgesetzt sind,
- ) zwei einzelne Beförderungskanäle (18, 18') für die besagten Fluide (F1, F2) im Inneren des Ventils (V1, V2) jeweils zwischen den ersten Leitungen (16, 16') und zweiten Leitungen (17, 17'), die jeweils in der Kammer (14) münden und mit der Bewegung eines jeweiligen Fluids (F1, F2) zwischen dem Außenraum und dem Inneren des Ventils (V1, V2) beaufschlagt sind,
- ) mindestens einer Leitung (23) zum Abfluss von Fluiden (F1, F2), die in das Innere der Kammer (14) eingelassen sind,
wobei Fluidpfade des Ventils (V1, V2), die jeweils die Fluide (F1, F2) weiterleiten, jeweils getrennt voneinander mindestens eine erste Leitung (16, 16'), einen Kanal (18, 18') und eine zweite Leitung (17, 17'), die hintereinander in fluidischer Verbindung stehen, aufweisen,
**dadurch gekennzeichnet, dass** für jeden der Fluidpfade die erste Leitung (16, 16') an seiner Mündung (19, 19') in der Kammer (14) mit einem beweglichen Verschluss (20, 20') versehen ist, der mit einer Rampe (21, 21') zusammenwirkt, die auf dem Kolben (15) angeordnet ist, wobei ein Gleiten des Verschlusses (20, 20') entlang der Rampe (21, 21'), hervorgerufen durch die Wirkung einer Translationsbewegung des Kolbens (15) im Inneren der Kammer (14), die Mündung (19, 19') der ersten Leitung (16, 16') freilegt und anschließend die erste Leitung (16, 16') und die zweite Leitung (17, 17') miteinander durch den Kanal (18, 18') in eine fluidische Verbindung bringt, wobei das fluidische Verbinden der ersten Leitung (16, 16') und der zweiten Leitung (17, 17') miteinander eine Fluidzufuhr (F1, F2) durch den Kanal (18) von der ersten Leitung (16, 16') zur zweiten Leitung (17, 17') liefert.

2. Ventil nach Anspruch 1,
**dadurch gekennzeichnet, dass** für jeden der Fluidpfade der Kanal (18, 18') aus einem axialen Endabschnitt der Kammer (14) gebildet wird, in den die erste Leitung (16, 16') und die zweite Leitung (17, 17') münden.

3. Ventil nach einem der Ansprüche 1 und 2,
**dadurch gekennzeichnet, dass** der Ventilkörper (13) in zwei Blöcke (44, 44') des Ventilkörpers unterteilt ist, die miteinander axial zusammengefügt sind, wobei die Blöcke (44, 44') jeweils Fluidpfade bilden, indem sie jeweilige koaxiale Kammerabschnitte aufweisen,
und
dadurch, dass der Kolben (15) in zwei Kolbenabschnitte (32, 33) mit unterschiedlichem Aufbau unterteilt ist, wobei die Kolbenabschnitte (32, 33) jeweils in den Kammerabschnitten gelagert sind, wobei sie sich untereinander axial abstützen.

4. Ventil nach einem der Ansprüche 1 bis 3,
**dadurch gekennzeichnet, dass** die mindestens eine Abflussleitung (23) als von den Fluidpfaden durch Dichtmittel (22, 22'), die zwischen den Kolben (15) und der Kammer (14) angeordnet sind, isolierter Abfluss angeordnet ist, wobei die Abflussleitung (23) ein verlorenes Fluid (24), das von einem möglichen Rest mindestens eines der Fluide (F1, F2) stammt, das von dessen Durchsickern durch die Dichtmittel (22, 22') herrührt, sammelt und aus dem Ventil (V1, V2) abführt.

5. Ventil nach Anspruch 4,
**dadurch gekennzeichnet, dass** die Abflussleitung (23) ein verlorenes Fluid (24) sammelt und abführt, das von dem einen und dem anderen der Fluide (F1, F2) herrührt.

6. Ventil nach einem der Ansprüche 4 und 5,
**dadurch gekennzeichnet, dass** die Dichtmittel (22, 22') Dichtungen aufweisen, die axial zwischen der Abflussleitung (23) und einem jeweiligen axialen Ende der Kammer (14) angeordnet sind.

7. Ventil nach einem der Ansprüche 4 bis 6,
**dadurch gekennzeichnet, dass** eine Alarmvorrichtung (38) zur Warnung bei einem Ausfall des Ventils (V1, V2) durch Mittel (40) zur Berechnung der Menge des verlorenen Fluids (24), das aus der Abflussleitung (23) abgeführt wird, gebildet wird.

8. Ventil nach einem der Ansprüche 1 bis 7,
**dadurch gekennzeichnet, dass** das Ventil (V1, V2) hydraulische Dämpfermittel der Beweglichkeit des Kolbens (15) im Inneren der Kammer (14) aufweist.

9. Ventil nach Anspruch 8,
**dadurch gekennzeichnet, dass** die hydraulischen Dämpfermittel durch Sacklöcher (41, 41') gebildet werden, die jeweils am Boden der axialen Enden der Kammer (14) münden und mit jeweiligen axialen Verlängerungen (42, 42') des Kolbens (15) zusammenwirken, wobei die Sacklöcher (41, 41') jeweils die Verlängerungen (42, 42') nach einer axialen Verschiebung des Kolbens (15) im Inneren der Kammer (14) aufnehmen, und wobei jeweils zwischen den Sacklöchern (41, 41') und den zusammenwirkenden Verlängerungen (42, 42') ausgebildete Spielräume (J) Kanäle (43, 43') bilden zur kontrollierten Abfuhr von Fluiden (F1, F2) aus den Sacklöchern (41, 41') in die Kammer (14).

10. Ventil nach einem der Ansprüche 1 bis 9,
**dadurch gekennzeichnet, dass** in einer axialen stabilisierten Stellung des Kolbens (15) im Inneren der Kammer (14) unter Einwirkung ausgeglichener Drücke, die auf die axialen Endflächen des Kolbens (15) jeweils durch das eine oder das andere der Fluide (F1, F2) ausgeübt werden, ein axialer Abstand (E, E') zwischen den Verschlüssen (20, 20') und den Rampen (21, 21'), mit denen die Verschlüsse (20, 20') jeweils zusammenwirken, gebildet wird.

11. Ventil nach einem der Ansprüche 1 bis 10,
**dadurch gekennzeichnet, dass** das Ventil (V1, V2) Mittel zum Bremsen der Beweglichkeit des Kolbens (15) im Inneren der Kammer (14) aufweist.

12. Ventil nach Anspruch 11,
**dadurch gekennzeichnet, dass** die Bremsmittel durch mindestens eine der folgenden Ausgestaltungen gebildet werden:
- ) ein Gefälle der Rampen (21, 21'), dessen Neigung bezüglich der Erstreckungsachse (A2) des Kolbens (15) zwischen 5° und 60° liegt, und
- ) eine Anordnung von Dichtmitteln (22, 22'), die bei der axialen Bewegung des Kolbens (15) entlang diesem reiben.

13. Ventil nach einem der Ansprüche 1 bis 12,
**dadurch gekennzeichnet, dass** das Ventil (V1, V2) mit Mitteln (25, 25') zur Erfassung der Lage des Kolbens (15) im Inneren der Kammer (14) versehen ist, wobei die Erfassungsmittel (25, 25') Generatoren eines Alarmsignals (28) im Falle der Erfassung eines axialen Weges des Kolbens (15), der größer als ein vordefinierter tolerierter Weg ist, sind.

14. Ventil nach Anspruch 13,
**dadurch gekennzeichnet, dass** die Erfassungsmittel (25, 25') Generatoren einer Veränderung des Alarmsignals (28) in Abhängigkeit von der axialen Lage des Kolbens (15) im Inneren der Kammer (14) sind.

15. Ventil nach einem der Ansprüche 13 und 14,
**dadurch gekennzeichnet, dass** die Erfassungsmittel (25, 25') aus mindestens einem Satz von Komponenten gebildet werden, die durch Wellen zusammenwirken und mindestens eine erste Komponente (26, 26') aufweisen, die an einem beliebigen axialen Ende des Kolbens (15), der dieser zugeordnet ist, angeordnet ist, und eine zweite Komponente (27, 27'), die am Boden der Kammer (14) angeordnet ist und gegenüber dem axialen Ende des Kolbens (15) montiert ist.

16. Ventil nach Anspruch 15,
**dadurch gekennzeichnet, dass** die mindestens eine erste Komponente (26, 26') beliebig an irgendeiner axialen Endfläche des Kolbens (15) oder auf einer beliebigen Verlängerung (42, 42') angeordnet ist.

17. Ventil nach einem der Ansprüche 15 und 16,
**dadurch gekennzeichnet, dass** die Erfassungsmittel von dem Typ sind, der den "Hall-Effekt" ausnutzt, wobei die erste Komponente (26, 26') und die zweite Komponente (27, 27') aus Magneten gebildet sind, die untereinander ein Magnetfeld erzeugen, das von einer dritten Komponente (30, 30') durchquert wird, die auf dem Ventilkörper (13) montiert ist und eine elektrische Spannung erzeugt, die bei einem vorbestimmten Sollwert der elektrischen Spannung das Alarmsignal (28) erzeugt.

18. Ventil nach einem der Ansprüche 1 bis 17,
**dadurch gekennzeichnet, dass** die Verschlüsse (20, 20') rotationssymmetrische Flächen aufweisen, und dadurch, dass die Rampen (21, 21') auf den jeweiligen Enden des Kolbens (15) angeordnet sind.

19. Ventil nach einem der Ansprüche 1 bis 18,
**dadurch gekennzeichnet, dass** jede der ersten Leitungen (16, 16') versehen ist mit einem durchbrochenen Sitz (36, 36') zum Zurückhalten des mit ihm ausgestatteten Verschlusses (20, 20') gegenüber einem Entweichen des Verschlusses (20, 20') zum Inneren der ersten Leitung (16, 16') hin unter der Wirkung eines Drucks, der von dem in der Kammer (14) vorhandenen Fluid (F1, F2) als Überdruck relativ zu dem Fluid (F1, F2), das in die erste Leitung (16, 16') eingelassen ist, ausgeübt wird.

20. Ventil nach einem der Ansprüche 1 bis 19,
dadurch gekenntzeichnet, dass das Ventil (V1, V2) mit einem Mittel (31) zur Kontrolle der axialen Beweglichkeit des Kolbens (15) vor einem Einlauf von Fluiden (F1, F2) in das Innere des Ventils (V1, V2) versehen ist.

21. Ventil nach Anspruch 20,
**dadurch gekennzeichnet, dass** der Kolben (15) in zwei koaxiale Kolbenabschnitte (32, 33) unterteilt ist, die sich axial aneinander abstützen, wobei das Kontrollmittel (31) aus einem elastisch verformbaren Element (34) besteht, das axial zwischen den Kolbenabschnitten (32, 33) angeordnet ist, wobei dieses die Abschnitte zu den axialen Böden der Kammer (14), die jeweils gegenüber den Abschnitten des Kolbens (32, 33) liegen, wegschiebt.

22. Hydraulische Einrichtung zur Betätigung eines Organs (1) zur Veränderung des Flugverhaltens eines Luftfahrzeugs, wobei die hydraulische Einrichtung zwei getrennte Hydraulikkreise (2, 2') aufweist, die eine Verbindung von Fluiden (F1, F2) untereinander verbietet, die jeweils durch die Hydraulikkreise (2, 2') zwischen Fluidquellen (S1, S2) der jeweiligen Fluide (F1, F2) und den jeweiligen doppelt wirkenden Zylinderkörpern (C1, C2) mindestens einer Servosteuerung (3), die eine Betätigung des Organs (1) zur Veränderung des Flugverhaltens eines Luftfahrzeugs bewirken kann, befördert werden, wobei jeder Hydraulikkreis (2, 2') einen hydraulischen Verteiler (D1, D2) aufweist, der die Bewegung des Fluids (F1, F2) durch eine hintere Kammer (5, 5') und durch eine vordere Kammer (6, 6') eines Zylinderkörpers (C1, C2) regelt, dessen Versorgung mit Fuid (F1, F2) durch den hydraulischen Verteiler (D1, D2) eines gegebenen Hydraulikkreises (2, 2') geregelt wird, wobei die hydraulischen Verteiler (D1, D2) zusammen unter der Einwirkung von Flugbefehlen betätigbar sind, die von einem Piloten des Luftfahrzeugs erzeugt werden, und die gleichzeitig die Bewegung verschiedener Fluide (F1, F2) im Inneren der Zylinderkörper (C1, C2) regeln, **dadurch gekennzeichnet, dass** die hydraulische Einrichtung mit Ventilen (V1, V2) ausgerüstet ist, die jeweils gleich einem Ventil nach einem der Ansprüche 1 bis 21 sind, wobei ein erstes Ventil (V1) die jeweiligen Drücke von Fluiden (F1, F2) ausgleicht, die sich durch die jeweiligen hinteren Kammern (5, 5') des einen und des anderen Zylinderkörpers (C1, C2) bewegen, und wobei ein zweites Ventil (V2) die jeweiligen Drücke von Fluiden (F1, F2) ausgleicht, die durch die jeweiligen vorderen Kammern (6, 6') des einen und des anderen Zylinderkörpers (C1, C2) fließen.

23. Hydraulische Einrichtung nach Anspruch 22,
wobei die Bezeichnungen "stromauf" und "stromab" bezüglich einer Bewegungsrichtung von Fluiden (F1, F2) ausgehend von den Fluidquellen (S1, S2) zum Zylinderkörper (C1, C2) verwendet werden, **dadurch gekennzeichnet, dass** die ersten Leitungen (16, 16') eines jeden Ventils (V1, V2) stromauf von hydraulischen Verteilern (D1, D2) mit entsprechenden Fluidquellen (S1, S2) in Fluidverbindung stehen,
dass die zweiten Leitungen eines jeden der Ventile (V1, V2) stromab der hydaulischen Verteiler (D1, D2) in Fluidverbindung stehen für ein erstes Ventil (V1) mit jeweiligen hinteren Kammern (5, 5') der Zylinderkörper (C1, C2) und für ein zweites Ventil (V2) mit den jeweiligen vorderen Kammern (6, 6') der Zylinderkörper (C1, C2) und dass die Ventile (V1, V2) jeweils über die mindestens eine Abflussleitung (23), mit der die Ventile (V1, V2) jeweils versehen sind, sich jeweils zur Umgebungsluft öffnen.

24. Hydraulische Einrichtung nach Anspruch 23,
**dadurch gekennzeichnet, dass** das verlorene Fluid (24), das von der mindestens einen Abflussleitung (23) eines jeden der Ventile (V1, V2) gesammelt und abgelassen wird, in einem gemeinsamen Speichervolumen (39) gesammelt wird, das mit den Mitteln (40) zur Berechnung der Menge des in dem Speichervolumen (39) gesammelten verlorenen Fluids (24), versehen ist.

25. Hydraulische Einrichtung nach einem der Ansprüche 22 bis 24, **dadurch gekennzeichnet, dass** die Zylinderkörper (C1, C2) gleichermaßen Zylinderkörper (C1, C2) sind, die in eine Servosteuerung (3) mit mehreren Zylinderkörpern integriert sind, oder Zylinderkörper (C1, C2), die in Servosteuerungen (3) mit jeweiligen einfachen Zylinderkörpern versehen sind.

26. Luftfahrzeug (AC), **dadurch gekennzeichnet, dass** das Luftfahrzeug mindestens aufweist: ein Ventil (V1, V2) nach einem der Ansprüche 1 bis 21 und/oder eine hydraulische Einrichtung nach einem der Ansprüche 22 bis 25.

## Claims

1. Valve (V1, V2) suitable for balancing between the pressures of different fluids (F1, F2) circulating respectively inside a plurality of double-acting actuator bodies (C1, C2) of at least one servo-control (3) capable of manoeuvring a member (1) for varying flight attitude of an aircraft, said valve (V1, V2) comprising a valve body (13) comprising at least:
- ) a chamber (14) for guiding in translation a piston (15) along an axial extension direction (A2) of the chamber (14),
- ) two first ducts (16, 16') opening out into the chamber (14) and each assigned for the circulation of a respective fluid (F1, F2) between the outside and the inside of the valve (V1, V2),
- ) two passages (18, 18') for individually conveying said fluids (F1, F2) into the inside of the valve (V1, V2) respectively between the first ducts (16, 16') and second ducts (17, 17'), each opening out into the chamber (14) and assigned for the circulation of a respective fluid (F1, F2) between the outside and the inside of the valve (V1, V2),
- ) at least one discharge duct (23) for discharging the fluids (F1, F2) admitted into the inside of the chamber (14),
fluidic paths of the valve (V1, V2), conveying respectively the fluids (F1, F2) comprising each distinctly at least one said first duct (16, 16'), one said passage (18, 18') and one said second duct (17, 17') placed in fluidic communication with one another,
**characterised in that**, for each of said fluidic paths, the first duct (16, 16') is provided at its outlet (19, 19') into the chamber (14) with a movable obturator (20, 20') cooperating with a ramp (21, 21') arranged on the piston (15), a sliding of the obturator (20, 20') along the ramp (21, 21') caused under the effect of a movement in translation of the piston (15) inside the chamber (14) freeing the outlet (19, 19') of the first duct (16, 16') and consequently placing the first duct (16, 16') and the second duct (17, 17') into fluidic communication with each other via said passage (18, 18'), said putting into fluidic communication between the first duct (16, 16') and the second duct (17, 17') delivering additional fluid (F1, F2) via the passage (18) from the first duct (16, 16') to the second duct (17, 17').

2. Valve according to claim 1,
**characterised in that**, for each of said fluidic paths, the passage (18, 18') is formed by an axial extremity segment of the chamber (14) into which the first duct (16, 16') and the second duct (17, 17') open out.

3. Valve according to any one of claims 1 and 2,
**characterised:**
**in that** the valve body (13) is subdivided into two valve body blocks (44, 44') axially assembled together, said blocks (44, 44') providing respectively the fluidic paths by comprising coaxial respective chamber segments, and
**in that** the piston (15) is subdivided into two structurally distinct piston segments (32,33), the piston segments (32,33) being housed respectively in the chamber segments and bearing axially one against the other.

4. Valve according to any one of claims 1 to 3,
**characterised in that** said at least one discharge duct (23) is arranged as a drain isolated from the fluidic paths by sealing means (22, 22') interposed between the piston (15) and the chamber (14), the discharge duct (23) collecting and discharging from the valve (V1, V2) a lost fluid (24) coming from a possible residue of at least one of the fluids (F1, F2) resulting from its infiltration through the sealing means (22, 22').

5. Valve according to claim 4,
**characterised in that** the discharge duct (23) is common to the collecting and discharging of a lost fluid (24) coming from both of the fluids (F1, F2).

6. Valve according to any one of claims 4 and 5,
**characterised in that** the sealing means (22, 22') comprise seals axially interposed between the discharge duct (23) and a respective axial extremity of the chamber (14).

7. Valve according to any one of claims 4 to 6,
**characterised in that** a warning device (38) for warning of a malfunctioning of the valve (V1, V2) is formed by means for evaluation (40) of the quantity of lost fluid (24) discharged from the discharge duct (23).

8. Valve according to any one of claims 1 to 7,
**characterised in that** the valve (V1, V2) comprises hydraulic damping means for damping the movement of the piston (15) inside the chamber (14).

9. Valve according to claim 8,
**characterised in that** the hydraulic damping means are formed by blind cells (41, 41') opening out respectively at the end of the axial extremities of the chamber (14) and cooperating with respective axial extensions (42, 42') of the piston (15), the cells (41, 41') receiving respectively said extensions (42, 42') as a result of an axial movement of the piston (15) inside the chamber (14) and clearances (J) arranged respectively between the cells (41, 41') and the cooperating extensions (42, 42') leaving controlled discharge channels (43, 43') for discharging the fluids (F1, F2) from the cells (41, 41') to the chamber (14).

10. Valve according to any one of claims 1 to 9,
**characterised in that** in a stabilised axial position of the piston (15) inside the chamber (14) under the effect of balanced thrusts exerted on the axial extremity faces of the piston (15) respectively by each of the fluids (F1, F2), an axial gap (E, E') is left between the obturators (20, 20') and the ramps (21, 21') with which the obturators (20, 20') cooperate respectively.

11. Valve according to any one of claims 1 to 10,
**characterised in that** the valve (V1, V2) comprises braking means for braking the movement of the piston (15) inside the chamber (14).

12. Valve according to claim 11,
**characterised in that** said braking means are formed by at least one of the following arrangements:
- ) a slope of the ramps (21, 21') whose inclination relative to the extension axis (A2) of the piston (15) is comprised between 5° and 60°, and
- ) a mounting of the sealing means (22, 22') providing their friction along the piston (15) under the effect of its axial movement.

13. Valve according to any one of claims 1 to 12,
**characterised in that** the valve (V1, V2) is provided with detection means (25, 25') for detecting the position of the piston (15) inside the chamber (14), said detection means (25, 25') generating a warning signal (28) in the event of detection of an axial stroke of the piston (15) greater than a predefined tolerated stroke.

14. Valve according to claim 13,
**characterised in that** the detection means (25, 25') generate a variation of said warning signal (28) depending on the axial position of the piston (15) inside the chamber (14).

15. Valve according to any one of claims 13 and 14,
**characterised in that** the detection means (25, 25') are formed by at least one set of components cooperating by waves and comprising at least one first component (26, 26') placed at any axial extremity of the piston (15) associated therewith and one second component (27, 27') placed at the end of the chamber (14) arranged opposite said any axial extremity of the piston (15).

16. Valve according to claim 15,
**characterised in that** said at least one first component (26, 26') may be placed equally well at any axial extremity face of the piston (15) or on any of said extensions (42, 42').

17. Valve according to any one of claims 15 and 16,
**characterised in that** the detection means being of the type making use of the Hall effect, the first component (26, 26') and the second component (27, 27') are formed by magnets generating between them a magnetic field crossed by a third component (30, 30') mounted on the valve body (13) and producing an electrical voltage generating said warning signal (28) at a predefined setpoint electrical voltage.

18. Valve according to any one of claims 1 to 17,
**characterised in that** the obturators (20, 20') are at a surface of revolution and **in that** the ramps (21, 21') are arranged at respective extremities of the piston (15).

19. Valve according to any one of claims 1 to 18,
**characterised in that** each of the first ducts (16, 16') is provided with a perforated seat (36, 36') for retaining the obturator (20, 20') with which it is provided, against an escape of the obturator (20, 20') to the inside of the first duct (16, 16') under the effect of a thrust exerted by the fluid (F1, F2) present in the chamber (14) at a pressure higher than that of the fluid (F1, F2) admitted into the first duct (16, 16').

20. Valve according to any one of claims 1 to 19,
**characterised in that** the valve (V1, V2) is provided with a control means (31) for controlling the axial movement of the piston (15) prior to the admission of the fluids (F1, F2) into the inside of the valve (V1, V2).

21. Valve according to claim 20,
**characterised in that**, the piston (15) being subdivided into two coaxial piston segments (32,33) bearing axially one against the other, said control means (31) is formed by an elastically deformable member (34) axially interposed between the piston segments (32,33) and urging them towards the axial ends of the chamber (14) respectively facing said piston segments (32, 33).

22. Hydraulic installation suitable for manoeuvring a member (1) for varying flight attitude of an aircraft, the hydraulic installation comprising two distinct hydraulic circuits (2, 2') preventing communication with each other of fluids (F1, F2) respectively conveyed by the hydraulic circuits (2, 2') between respective fluid sources (S1, S2) of said fluids (F1, F2) and respective double-acting actuator bodies (C1, C2) of at least one servo-control (3) capable of causing a manoeuvre of said member (1) for varying flight attitude of an aircraft, each hydraulic circuit (2, 2') comprising a hydraulic distributor (D1, D2) regulating the circulation of the fluid (F1, F2) through an end chamber (5, 5') and through a head chamber (6, 6') of an actuator body (C1, C2) whose supply of fluid (F1, F2) is regulated by the hydraulic distributor (D1, D2) of a given hydraulic circuit (2, 2'), the hydraulic distributors (D1, D2) being jointly actuatable under the effect of a flight control generated by a pilot of the aircraft and simultaneously regulating the circulation of the various fluids (F1, F2) inside the actuator bodies (C1, C2),
**characterised in that** the hydraulic installation is equipped with valves (V1, V2) each in accordance with a valve according to any one of claims 1 to 21, a first valve (V1) balancing the respective pressures of the fluids (F1, F2) circulating through the respective end chambers (5, 5') of each of the actuator bodies (C1, C2) and a second valve (V2) balancing the respective pressures of the fluids (F1, F2) circulating through the respective head chambers (6, 6') of each of the actuator bodies (C1, C2).

23. Hydraulic installation according to claim 22,
**characterised in that** the concepts of "upstream" and "downstream" being considered relative to a direction of circulation of the fluids (F1, F2) from the fluid sources (S1, S2) to the actuator bodies (C1, C2),
**in that** the first ducts (16, 16') of each of the valves (V1, V2) are in fluidic communication upstream from the hydraulic distributors (D1, D2) with respective fluid sources (S1, S2),
**in that** the second ducts (17, 17') of each of the valves (V1, V2) are in fluidic communication downstream from the hydraulic distributors (D1, D2), for a first valve (V1) with the respective end chambers (5, 5') of the actuator bodies (C1, C2) and for a second valve (V2) with the respective head chambers (6, 6') of the actuator bodies (C1, C2), and
**in that** the valves (V1, V2) each open out to the open air via said at least one discharge duct (23) with which the valves (V1, V2) are each provided.

24. Hydraulic installation according to claim 23, **characterised in that** the lost fluid (24) collected and discharged by said at least one discharge duct (23) of each of the valves (V1, V2) is collected in a common storage facility (39) provided with said means for evaluating (40) the quantity of lost fluid (24) collected by the storage facility (39).

25. Hydraulic installation according to any one of claims 22 to 24,
**characterised in that** the actuator bodies (C1, C2) may equally well be actuator bodies (C1, C2) incorporated in a servo-control (3) having multiple actuator bodies or actuator bodies (C1, C2) incorporated in servo-controls (3) having respective single actuator bodies.

26. Aircraft (AC), **characterised in that** said aircraft comprises at least: a valve (V1, V2) according to one of claims 1 to 21 and/or a hydraulic installation according to one of claims 22 to 25.
